# NEUE EUROPÄISCHE PATENTSCHRIFT

(11) **EP 1 228 113 B2**
(45) Veröffentlichungstag und Bekanntmachung des Hinweises auf die Entscheidung über den Einspruch: **23.04.2008**
(45) Hinweis auf die Patenterteilung: 30.03.2005
(21) Anmeldenummer: 00972776.9
(22) Anmeldetag: 16.10.2000
(51) Int. Cl.: C08F 283/00, C08G 18/08, C09D 175/04

(54) **LÖSEMITTELFREIE POLYURETHAN-POLYMER-HYBRID-DISPERSION SOWIE DEREN VERWENDUNG**
SOLVENT-FREE POLYURETHANE-POLYMER-HYBRID-DISPERSION AND USE THEREOF
DISPERSION HYBRIDE POLYMERE/POLYURETHANNE SANS SOLVANT ET SON UTILISATION

(30) Priorität: 16.10.1999 DE 19949971
(43) Veröffentlichungstag der Anmeldung: 07.08.2002
(73) Patentinhaber: Construction Research & Technology GmbH, 83308 Trostberg (DE)
(72) Erfinder: MAIER, Alois, 84549 Engelsberg (DE); INGRISCH, Stefan, 83358 Seebruck (DE); WINKELMANN, Herbert, 84518 Garching (DE); WOLFERTSTETTER, Franz, D-83349 Palling (DE); KERN, Alfred, 84558 Kirchweidach (DE); TEMME, Werner, 78244 Bietingen (DE); BERGS, Ralph, 78247 Hilzingen (DE)
(74) Vertreter: Böhm, Brigitte
(86) Internationale Anmeldenummer: PCT/EP2000/010170
(87) Internationale Veröffentlichungsnummer: WO 2001/029102

(56) Entgegenhaltungen:
- EP-A- 0 308 115
- EP-A- 0 666 275
- EP-A- 0 742 239
- DE-A- 19 812 751
- GB-A- 1 078 202
- US-A- 4 198 330
- US-A- 5 521 246

## Beschreibung

Die vorliegende Erfindung betrifft eine lösemittelfreie Polyurethan-Polymer-Hybrid-Dispersion mit einem hohen Festkörper-Gehalt an Polymer oder Formulierungs-Bestandteilen sowie deren Verwendung.

Die Bindemittel-Klasse der wässrigen bzw. wasserbasierenden Polyurethane ist seit über 40 Jahren bekannt. Das Eigenschaftsprofil der wasserbasierenden Polyurethane wurde in den vergangenen Jahrzehnten kontinuierlich verbessert, was durch eine Vielzahl von Patentschriften und Veröffentlichungen zu diesem Themenkreis eindrucksvoll belegt wird. Die Tatsache, daß wässrige Polyurethane gerade in den letzten Jahren zunehmende kommerzielle Bedeutung erlangt haben, ist auf drei Ursachen zurückzuführen:
1. Die zunehmende Verschärfung der Umweltgesetzgebung erfordert die Entwicklung ökologisch und physiologisch verträglicher Produkte, bei denen die Emissionen an Lösemitteln und anderen flüchtigen organischen Verbindungen (VOC, volatile organic compounds) auf ein Minimum reduziert sind.
2. Die Verwendung von teuren organischen Lösemitteln in konventionellen und wässrigen Polyurethanen ist aus ökonomischen Gründen unerwünscht.
3. Die Performance von wässrigen Polyurethane erreicht oder übertrifft bereits die der konventionellen lösemittelbasierenden Polyurethane.

Auch innerhalb von bauchemischen Anwendungen gewinnen wasserbasierende Polyurethane als Bindemittel immer mehr an Bedeutung. In der Bauchemie werden insbesondere Polyurethan-Dispersionen und Polyurethan-Polymer-Hybrid-Dispersionen mit einem hohen Festkörper-Gehalt an Polyurethan-Polymer oder Formulierungsbestandteilen gewünscht, die mit Hilfe von rationellen und zugleich universellen Herstellungsverfahren zugänglich gemacht werden können. Im Vordergrund stehen dabei lösemittelarme (low VOC) oder lösemittelfreie (zero VOC) Produkte.

Die Chemie und Technologie der wasserbasierenden Polyurethane ist seit vielen Jahren bekannt und wird in einer großen Zahl von Veröffentlichungen im Detail beschrieben, z.B. D. Dieterich, K. Uhlig in Ullmann's Encyclopedia of Industrial Chemistry; Sixth Edition 1999 Electronic Release. Wiley-VCH; D. Dieterich in Houben-Weyl, Methoden der Organischen Chemie. Bd. E20, H. Bartl, J. Falbe (Hrsg.), Georg Thieme Verlag, Stuttgart 1987, S. 1641ff.; D. Dieterich, Prog. Org. Coat. 9 (1981) 281-330; J. W. Rosthauser, K. Nachtkamp, Journal Of Coated Fabrics: 16 (1986) 39-79; R. Arnoldus, Surf. Coat. 3 (Waterborne Coat.) (1990), 179-98.

Wäßrige Polyurethan-Dispersionen bestehen aus Polyurethan-Polymeren bzw. Polyurethan-Polyharnstoff-Polymeren, die sowohl Urethan-Gruppen als auch Harnstoff-Gruppen beeinhalten und durch Polyadditions-Reaktionen von Polyolen, Polyisocyanaten und Polyaminen zugänglich sind. Aus den Polyolen und den Polyisocyanaten werden zunächst Polyurethan-Prepolymere hergestellt, die dann in der wäßrigen Phase dispergiert und mit Polyaminen unter Aufbau der Polyurethan-Polyharnstoff-Polymere kettenverlängert werden. Die Polyurethan-Polymere enthalten zudem eine ausreichende Menge an hydrophilen Gruppen, welche die Stabilisierung in der wäßrigen Phase gewährleisten. Bei diesen hydrophilen Gruppen handelt es sich um anionische, kationische oder nicht-ionische Gruppen. Die Ladungsdichte der hydrophilen Gruppen in Bezug auf das Polyurethan-Polymer hängt von der Charakteristik und der Stöchiometrie der verwendeten Aufbau-Komponenten ab. Polyurethan-Dispersionen stellen Zweiphasen-Systeme dar, die aus Micellen mit Polyurethan-Polymeren und einer wäßrigen Phase bestehen. Bei der Auftrocknung der Polyurethan-Dispersionen erfolgt eine Koaleszenz bzw. Verschmelzung der Micellen und eine Filmbildung bzw. Verfilmung der Polyurethan-Polymeren.

Für die Herstellung von Polyurethan-Dispersionen in der Technik haben der *Prepolymer Mixing Process* und der *Solvent Process* die größte Bedeutung erlangt.

Diese konventionellen Verfahren zur Herstellung von Polyurethan-Dispersionen sind jedoch mit verschiedenen Problemen behaftet.

Bei dem sog. *Prepolymer Mixing Process* bzw. *Präpolymer-Mischverfahren* werden zur Verringerung der Viskosität der Polyurethan-Prepolymere signifikante Mengen an hochsiedenden und wasserlöslichen Solventien, wie bspw. N-Methylpyrrolidon, zugesetzt. Diese Lösemittel verbleiben nach der Herstellung in der Polyurethan-Dispersion. Bei der Auftrocknung der Polyurethan-Dispersionen bzw. der daraus hergestellten Produkte werden diese Lösemittel an die Umwelt abgegeben. Neben dem vorhandenen Lösemittel-Gehalt sind die niedrigen Feststoff-Gehalte, die zumeist moderaten Material-Eigenschaften und die großen Mengen der zur Stabilisierung der Polyurethan-Dispersionen benötigten, hydrophilen Gruppen von Nachteil. Der Prepolymer Mixing Process stellt jedoch ein einfaches und rationelles Herstellungsverfahren mit einer großen synthetischen Bandbreite dar, was in vielen Fällen von großem Vorteil ist.

Bei dem sog. *Solvent Process* bzw. *Aceton-Verfahren* wird der komplette Aufbau der Polyurethan-Polymere in Gegenwart von großen Mengen an niedrigsiedenden und wasserlöslichen Solventien, wie bspw. Aceton oder Methylethylketon, durchgeführt. Die Solventien müssen nach der Herstellung der Polyurethan-Dispersion durch eine aufwendige Redestillation wieder entfernt werden, die resultierenden Polyurethan-Dispersionen sind daher weitgehend lösemittelfrei. Neben der Lösemittel-Freiheit sind die hohen Feststoff-Gehalte, die exzellenten Material-Eigenschaften und die geringen Mengen der zur Stabilisierung der Polyurethan-Dispersionen benötigten, hydrophilen Gruppen von Vorteil. Der Solvent Process stellt jedoch ein kompliziertes und wirtschaftlich nicht optimales Herstellungsverfahren mit einer geringen Raum/Zeit-Ausbeute dar, was gerade im Hinblick auf bauchemische Anwendungen von großem Nachteil ist.

Daneben existieren noch verschiedene Kombinationen aus *Prepolymer Mixing Process* und *Solvent Process,* die jedoch eine ähnliche Problematik aufweisen. So kann beim Prepolymer Mixing Process ein Gemisch aus niedrig- und hochsiedenden Solventien eingesetzt werden oder beim *Solvent Process* der komplette Aufbau der Polyurethan-Dispersion in die wäßrige Phase verlegt werden.

In neuerer Zeit gibt es zunehmend Bestrebungen seitens der Hersteller von Polyurethan-Dispersionen, Solventien wie N-Methylpyrrolidon durch ökologisch unbedenkliche und nicht kennzeichnungspflichtige Glykolether, wie bspw. Dipropylenglykoldimethylether (Proglyde DMM® der Fa. Dow) zu ersetzen. Eine derartige Umstellung führt jedoch zu einer Kosten-Erhöhung des Prepolymer Mixing Process.

Polyurethan-Dispersionen und Acrylat-Dispersionen finden umfassende Anwendung in Lacken und Beschichtungen, beide Bindemittel-Typen weisen jedoch spezifische Vorteile und Nachteile auf. Acrylat-Dispersionen besitzen im allgemeinen nur ein moderates Eigenschaftsprofil, sind aber kostengünstig. Polyurethan-Dispersionen weisen dagegen eine hervorragende Performance bei signifikant höheren Kosten auf. Als Preis/Performance-Kompromiß werden daher häufig einfache Abmischungen aus Polyurethan-Dispersionen und Acrylat-Dispersionen eingesetzt, die Material-Eigenschaften dieser Blends sind jedoch normalerweise schlechter, als die bekannte "Mischungsregel" erwarten ließe.

Zur Erzielung eines wirklichen Preis/Performance-Vorteils wurden daher in den letzten Jahren verstärkt wäßrige Polyurethan-Acrylat-Hybrid-Dispersionen entwickelt. Die Herstellung dieser Polyurethan-Polymer-Hybrid-Dispersionen erfolgt durch eine sog. *in*-*situ polymerization.* Die Monomeren werden dabei in Gegenwart von Polyurethan-Basis-Dispersionen und geigneten Initiator-Systemen einer radikalischen Polymerisation unterzogen. In den resultierenden Hybrid-Systemen liegen micellare Strukturen vor, die auf molekularer Ebene aus physikalisch verknüpften Polyurethan- und Polymer-Ketten bestehen. Als Indikator für die Bildung dieser *interpenetrating networks* kann die Glasübergangstemperatur herangezogen werden, die über weite Bereiche (> 50 °C) verschmiert ist. Ohne entsprechende Modifizierung der Polyurethan-Dispersionen besteht keine zusätzliche chemische Verknüpfung zwischen den Polyurethan- und Polymer-Ketten. Der Zusammenhalt der Makromoleküle erfolgt primär durch gegenseitige Verschlingung der Polyurethan- und Polymer-Ketten und sekundär durch intermolekulare Wechselwirkungskräfte. Es ist jedoch nicht auszuschließen, daß in geringem Ausmaß eine Propfung von Polymer-Ketten an Polyurethan-Ketten auftritt, was zu einer Erhöhung der Stabilität des Hybrid-Systems führt. Polyurethan-Polymer-Hybrid-Dispersionen weisen auf Grund ihrer besonderen Morphologie bessere Material-Eigenschaften auf als vergleichbare Abmischungen aus Polyurethan- und Acrylat-Dispersionen oder hypothetische Abmischungen gemäß der "Mischungsregel".

Zur Herstellung von Polyurethan-Polymer-Hybrid-Dispersionen wird in der Technik üblicherweise das in der Literatur häufig (fälschlicherweise) als in-situ polymerization bezeichnete Verfahren in seinen verschiedenen Varianten verwendet.

### Variante 1

- 1A:: Alle Monomeren werden vor der D, N, KV als Reaktivverdünner in das Polyurethan-Prepolymer eingebracht
- 1B:: Alle Monomeren werden vor der D, N, KV des Polyurethan-Prepolymers im Dispergiermedium vorgelegt
- 1C:: Die Monomeren werden nach der D, N, KV des Polyurethan-Prepolymers vollständig in die Polyurethan-Basis-Dispersion eingebracht
- 1D:: Die Monomeren werden nach der D, N, KV des Polyurethan-Prepolymers kontinuierlich in die Polyurethan-Basis-Dispersion eingebracht

### Variante 2

- 2A:: Ein Teil der Monomeren wird vor der D, N, KV als Reaktivverdünner in das Polyurethan-Prepolymer eingebracht
- 2B:: Ein Teil/Der Rest der Monomeren wird vor der D, N, KV des Polyurethan-Prepolymers im Dispergiermedium vorgelegt
- 2C:: Ein Teil/Der Rest der Monomeren wird nach der D, N, KV des Polyurethan-Prepolymers vollständig in die Polyurethan-Basis-Dispersion eingebracht
- 2D:: Ein Teil/Der Rest der Monomeren wird nach der D, N, KV des Polyurethan-Prepolymers kontinuierlich in die Polyurethan-Basis-Dispersion eingebracht
(D = Dispergierung, N = Neutralisation, KV = Kettenverlängerung)

Der Initiator kann zusammen mit den Monomeren oder separat zugegeben werden. Üblicherweise wird der Initiator nach der Dispergierung des Polyurethan-Prepolymers zugegeben. Die radikalische Polymerisation kann grundsätzlich während oder nach der Kettenverlängerung bzw. teilweise vor und teilweise nach der Kettenverlängerung erfolgen. Üblicherweise wird die radikalische Polymerisation nach der Kettenverlängerung durchgeführt. Man spricht bei den Varianten 1A bis 1C von einem *batch process,* bei der Variante 1D von einem *seed-feed process,* bei den Varianten 2A bis 2D liegt ein kombiniertes Verfahren vor.

Die Verwendung von Reaktivverdünnern gemäß den Varianten 1A und 2A ist nicht unproblematisch, da zur vollständigen Emulgierung der hydrophoben Monomeren im wäßrigen Milieu häufig hydrophile Colösemittel und/oder Dispergieradditive bzw. Surfactants eingesetzt werden müssen. Die Festkörper-Gehalte der Hybrid-Systeme sind daher zwangsläufig niedrig. Zudem wird durch die Gegenwart der Dispergier-Additive bzw. Surfactants neben der Hybridisierung eine konventionelle Emulsionspolymerisation der Monomeren als Nebenreaktion ausgelöst, was zu einer Verschlechterung der Material-Eigenschaften führt. Da die Reaktivverdünner zumindest kurzzeitig den Reaktionsbedingungen der Polyurethan-Prepolymer-Synthese ausgesetzt sind, ist häufig eine zusätzliche Inhibierung der Monomeren erforderlich, die bei der nachfolgenden radikalischen Polymerisation ggf. durch eine erhöhte Menge an Initiator kompensiert werden muß.

Für die Vorlage der Monomeren im Dispergier-Medium gemäß den Varianten 1B und 2B sind ebenfalls Dispergieradditive bzw. Surfactants erforderlich, um bei der Dispergierung überhaupt eine Homogenisierung von Polyurethan-Prepolymer und Monomeren auf molekularer Ebene erzielen zu können. Dementsprechend können auch hier Nebenreaktionen auftreten.

Beim *seed-feed process* gemäß den varianten 1D und 2D werden Monomere und Initiator (halb-) kontinuierlich in die auf den Bereich der Zerfallstemperatur des Initiators erwärmte Polyurethan-Basis-Dispersion zudosiert. Die Monomeren können dabei im wäßrigen Milieu bereits vor der Emulgierung durch die Polyurethan-Basis-Dispersion polymerisieren, was zu einer mehr oder weniger starken Koagulat-Bildung führen kann. Liegt zudem auch noch ein hydrophiler bzw. wasserlöslicher Initiator vor, erfolgt wiederum eine konventionelle Emulsionspolymerisation der Monomeren als Nebenreaktion.

### Variante 1A:

In der US-PS 5,371,133 wird ein Verfahren zur Herstellung von Polyurethan/Acrylat- oder Polyurethan/Vinyl-Latices beschrieben, bei dem das Polyurethan-Polymer keinerlei Harnstoff-Gruppen aufweist. Ein mit Polyethylenglykol nicht-ionisch hydrophiliertes Polyurethan-Harz läßt man in Gegenwart von Acrylat- oder Vinyl-Monomeren als Lösemittel oder Reaktivverdünner vollständig ausreagieren. Nach Überführung in die wäßrige Phase und Zusatz von Radikal-Initiatoren wird eine radikalische Polymerisation ausgelöst. Das beschriebene Verfahren weist eine Reihe von gravierenden Nachteilen auf. Zur Lösung des hochmolekularen Polyurethan-Harzes (NCO/OH-Equivalent-Verhältnis = 1/1) werden große Mengen an Monomeren benötigt, für die Dispergierung sind zusätzliche Surfactants erforderlich. Bei der radikalischen Polymerisation werden hydrophile Radikal-Initiatoren und weitere hydrophile Monomere zugegeben, die in Kombination mit Surfactants erfahrungsgemäß erhebliche Mengen an konventionellen Emulsionspolymerisaten auf Acrylat- oder Vinyl-Basis als Nebenprodukte entstehen lassen. Die viskositätsmindernde Wirkung der Reaktivverdünner erklärt die Diskrepanz zwischen den beschriebenen Hybrid-Systemen mit einem Festkörper-Gehalt von 40 bis 50 Gew.-% und einer Viskosität von 1000 bis 5000 mPa·s und einer ebenfalls beschriebenen reinen Polyurethan-Dispersion mit einem Festkörper-Gehalt von nur 33 Gew.-% und einer Viskosität von 27000 mPa·s.

### Variante 1C:

Die EP-A 666 275 beschreibt ein Verfahren zur Herstellung von lösemittelfreien Polyurethan/Acrylat-Polymer-Dispersionen zur Verwendung als Laminierungsklebstoffe für flexible Verpackungsmaterialien. Bei der Herstellung des Polyurethan-Prepolymers auf Basis Polyester-Polyol, Dimethylolpropionsäure und Isophorondiisocyanat werden zwar keine organischen Lösemittel eingesetzt, zur Reduzierung der hohen Viskosität muß jedoch die gleiche Menge an Acrylat-Monomer als Reaktivverdünner eingesetzt werden. Bedingt durch das niedrige NCO/OH-Equivalent-Verhältnis von 1.20 weisen die resultierenden Polyurethan-Prepolymere nur einen sehr geringen Gehalt an freien Isocyanat-Gruppen auf (1.43 Gew. -%). Nach der Neutralisation und Dispergierung wird der Radikal-Initiator in Aceton als Lösemittel zugegeben. Im Anschluß daran wird mit einem Kettenstopper und einem Kettenverlängerer umgesetzt, deren Gewichts-Verhältnis auf 20 : 80 bis 80 : 20 eingestellt wird. Als Kettenstopper wird ein Monoaamin und als Kettenverlängerer ein Diamin eingesetzt. Zum Schluß wird durch Temperaturerhöhung eine radikalische Polymerisation ausgelöst. Die so hergestellten Hybrid-Systeme weisen einen Festkörper-Gehalt von nur 41 bis 42 Gew.-% auf. Die verwendeten Polyurethan-Basis-Dispersionen besitzen mittlere Molekularmassen von unter 25 000 Dalton.

### Varianten 1C sowie 2A, 2C und 2D:

In der WO 99/16805 werden wäßrige Polymer-Dispersionen beschrieben, die aus einem in Wasser dispergierten Polyurethan-Polymer und einem Vinyl-Polymer bestehen und für die Beschichtung von Holz und Pappe eingesetzt werden. Die Polyurethan-Komponente besteht aus Polyalkylenglykolen oder Polyester-Polyolen, Dimethylolpropionsäure und aliphatischen Polyisocyanaten; die Acrylat-Komponente setzt sich aus Acrylaten, Methacrylaten und Styrol zusammen. Sowohl die Polyurethan-Basis-Dispersion als auch die Polyurethan-Polymer-Hybrid-Dispersion weisen sehr niedrige Festkörper-Gehalte auf und enthalten zudem N-Methylpyrrolidon als Lösemittel. Bedingt durch das niedrige Polyurethan/Acrylat-Verhältnis müssen bereits im Stadium der Synthese des Polyurethan-Prepolymers große Mengen an Säure-Gruppen eingebaut werden, um die Stabilisierung der Monomeren bzw. Polyurethan-Polymer-Hybrid-Dispersion gewährleisten zu können (Säurezahl ≥ 44 mg KOH· g⁻¹, > 10.5 Gew.-% DMPA). Das zur Hybridisierung verwendete Verfahren ist aufwendig und kompliziert, die Polymerisation erfolgt mit einem dreistufigen Verfahren ("triple batch method") .

### Varianten 1C sowie 2C und 2D:

Die EP-A 309 114 offenbart wäßrige Dispersionen aus Vinyl-Polymeren und nicht-ionischen wasserdispergierbaren Polyurethanen mit seitenständigen Polyethylenoxid-Ketten. Die diesen Hybrid-Systemen zugrundeliegenden Polyurethan-Dispersionen sind gegenüber Säuregruppen unempfindlich und basieren auf Polyalkylenglykolen, aliphatischen und oder aromatischen Polyisocyanaten und dispergierenden Diolen auf Grundlage von MPEG 750 und ermöglichen bei der nachfolgenden Polymersation den Einsatz von Acrylsäure bzw. Methacrylsäure als Comonomere. Die Festkörper-Gehalte der Polyurethan-Polymer-Hybrid-Dispersionen bewegen sich auf sehr niedrigem Niveau, die Synthese der nicht-ionisch modifizierten Polyurethan-Basis-Dispersionen erfordert große Mengen an organischen Lösemitteln.
Die EP-A 297 576 offenbart ein Verfahren zur Herstellung eines Mehrschichtüberzuges und hierfür geeignetes wässriges Überzugsmittel. Die beschriebenen Polyurethan-Basis-Dispersionen basieren auf Polyester-Polyolen und werden mit Hilfe des *Solvent Process* hergestellt. Neben Aceton wird zusätzlich N-Methylpyrrolidon als Lösemittel eingesetzt, das in Lösung verbleibt. Als Monomere werden (Meth) acrylate und Hydroxyalkyl(meth)acrylate und als Initiator 2,2'-Azoisobutyronitril verwendet. Aufgrund des HerstellungsVerfahrens kann das Polyurethan-Polymer-Hybrid mit einer relativ niedrigen Säurezahl (12 bis 40 mg KOH· g⁻¹) hergestellt werden. Die Festkörper-Gehalte der Hybrid-Systeme liegen im Bereich von nur 32 bis 35 Gew.-%.

Weiterhin ist bekannt, in das zunächst hergestellte Polyurethan-Harz terminale oder laterale α,β-olefinisch ungesättigte Doppelbindungen einzubauen. Diese Polyurethan-Makromonomeren sollen den Vorteil einer besseren chemischen Anbindung an das durch radikalische Polymerisation hergestellte Polymer-Harz bieten. Eine zusätzliche chemische Vernetzung kann durch Modifizierung der Polyurethan-Polymere mit radikalisch polymerisierbaren Doppelbindungen erreicht werden, z.B. durch terminalen Einbau von Hydroxyalkyl(meth)acrylaten oder α,α-Dimethyl-3-isopropenylbenzylisocyanat (m-TMI) oder durch lateralen Einbau von Maleinsäure oder Itaconsäure innerhalb von Polyester-Polyolen, ist aber aufwendig und verbessert die Material-Eigenschaften der Polyurethan-Polymer-Hybrid-Dispersion nicht signifikant. Bereits in der DE-OS 19 53 348 wird beschrieben, daß auch ohne den Einbau von ungesättigten Gruppen in das Polyurethan-Poymer bei der radikalischen Polymerisation eine mehr oder weniger stark ausgeprägte Pfropfung eintritt und daß die hohe Vernetzungsdichte, die sich aus der Verwendung ungesättigter Polyurethan-Polymere ergibt, mitunter von Nachteil sein kann.

Gemäß dem Stand der Technik werden üblicherweise Polyurethan-Flüssigkunststoffe zur Herstellung von Leichtathletiklaufbahnen, Schulsportanlagen, Mehrzwecksportbelägen, Tennis- oder Ballspielanlagen, Elastikschichten unter Kunstrasen, Spielplätzen, Gehwegen, Kleinspielflächen, Sporthallen, Leichtathletikhallen und Mehrzwecksporthallen eingesetzt. Je nach Anforderungen können wasserdurchlässige oder wasserundurchlässige Beläge konstruiert werden.

Polyurethanbasierende Sportbodenbeläge für den Außen- und Innenbereich können auf verschiedenen Untergründen wie Asphalt, zementgebundenen Untergründen, Holz und Holzestrich hergestellt werden. Im einzelnen handelt es sich um Belagsaufbauten bestehend aus Polyurethan-Prepolymeren mit freien Isocyanatgruppen, die entweder einkomponentig feuchtigkeitshärtend oder zweikomponentig mit einer auf Polyol und/oder Amin basierenden Formulierung in einem definierten Mischungsverhältnis aushärten.

Im einzelnen handelt es sich hierbei um folgende nachfolgend näher beschriebene Produkte, die in den Formulierungen für Sportbodenbeläge zum Einsatz kommen:
1) Bindemittel für Elastikschichten
2) Haftvermittler und Grundierungen
3) Spritzbeschichtungen
4) Verlaufsbeschichtungen
5) Spachtelmassen
6) Klebstoffe
7) Versiegelungen

Nachteilig bei allen diesen Formulierungen auf Polyurethan-Basis ist die Tatsache, daß diese Produkte isocyanathaltig sind und teilweise große Mengen an Lösemittel enthalten, so daß von diesen Komponenten ein erhebliches Gefahrenpotential für Mensch und Umwelt ausgeht, weshalb bei deren Verarbeitung besondere Umweltschutz- und Sicherheitsmaßnahmen erforderlich sind. Außerdem härten diese isocyanathaltigen Formulierungen bei tiefen Temperaturen äußerst langsam aus und erreichen durch die Nebenreaktion mit Luftfeuchtigkeit oftmals nur ein vermindertes Eigenschaftsniveau.

Der vorliegenden Erfindung lag daher die Aufgabe zugrunde, eine lösemittelfreie Polyurethan-Polymer-Hybrid-Dispersion mit einem hohen Festkörper-Gehalt an Polymer oder Formulierungs-Bestandteilen zu entwickeln, welche die genannten Nachteile des Standes der Technik nicht aufweist, sondern gute anwendungstechnische Eigenschaften besitzt und gleichzeitig unter Berücksichtigung ökologischer, ökonomischer und physiologischer Aspekte hergestellt werden kann.

Diese Aufgabe wurde erfindungsgemäß durch die Bereitstellung einer lösemittelfreien Polyurethan-Polymer-Dispersion gelöst, die erhältlich ist, durch die Verfahrensschritte gemäß Anspruch 1 und die dort angegebenen Feststoffgehalte aufweist.

Es hat sich nämlich überraschenderweise gezeigt, daß diese Polyurethan-Polymer-Hybrid-Dispersionen sich nicht nur durch vollständige Lösemittel-Freiheit, hohe Festkörper-Gehalte bei geringer Viskosität und ein technisch einfaches Herstellungsverfahren auszeichnen, sondern darüber hinaus auch noch excellente mechanische Eigenschaften (z.B. Dehnung und Zugfestigkeit) und bedingt durch die geringe Hydrophilie eine hohe Wasserfestigkeit aufweisen.
Außerdem können in Gegenwart von Formulierungs-Komponenten hohe Füllgrade erzielt werden, was ebenfalls nicht vorhersehbar war.

Die erfindungsgemäße Polyurethan-Polymer-Hybrid-Dispersion ist definiert durch ihr mehrstufiges Herstellverfahren. In der Reaktionstufe a) wird zunächst eine Polyurethan-Basis-Dispersion hergestellt, die in der Reaktionstufe b) dann weiter zu einer Polyurethan-Polymer-Hybrid-Dispersion umgesetzt wird.

Zur Durchführung dieses Verfahrens wird unter Anwendung der in der Polyurethan-Chemie üblichen Techniken in der Reaktionsstufe a₁) 2 bis 40 Gew.-% einer Polyol-Komponente (A) (i) sowie ggf. 0,1 bis 2 Gew.-% einer Polyol-Komponente (A) (ii) mit 2 bis 20 Gew.-% einer Polyisocyanat-Komponente (B) ggf. in Gegenwart eines Katalysators zu einem Polyurethan-Preaddukt umgesetzt.

In der Reaktionsstufe a₁) erfolgt die Bildung des Polyurethan-Preaddukts vorzugsweise in der Weise, daß die Komponente (B) innerhalb eines Zeitraumes von einigen Minuten bis zu einigen Stunden dem Gemisch aus den Komponenten (A) (i) und ggf. (A) (ii) zugesetzt bzw. zudosiert wird oder alternativ dazu das Gemisch der Komponente (A) (i) und ggf. (A) (ii) innerhalb eines Zeitraumes von einigen Minuten bis zu einigen Stunden der Komponente (B) zugesetzt bzw. zudosiert wird.

In Reaktionsstufe a₁) wird das NCO/OH-Equivalentverhältnis der Komponenten (A) ( i ) , (A)(ii) und (B) vorzugsweise auf einen Wert von 2,5 bis 5,0 eingestellt.

Die Polyol-Komponente (A) (i) besteht aus mindestens einem höhermolekularen Polyol mit zwei oder mehreren gegenüber Polyisocyanaten reaktiven Hydroxyl-Gruppen und einer mittleren Molekularmasse (Zahlenmittel Mₙ) von 500 bis 6 000 Dalton, und zwar insbesondere auf Basis eines Polyether- und/oder Polyester-Polyols. Dabei handelt es sich vorzugsweise um polymere Polyole wie Polyalkylenglykole, aliphatische oder aromatische Polyester, Polycaprolactone, Polycarbonate, Makromonomere, Telechele oder Epoxid-Harze oder Gemische daraus. Polyalkylenglykole werden aus Monomeren wie Ethylenoxid, Propylenoxid, Butylenoxid, Tetrahydrofuran durch Polymerisation in Gegenwart von Bortrifluorid oder durch Polyaddition an Starter-Verbindungen mit reaktiven Wasserstoffatomen wie Wasser, Alkohole, Amine oder Bisphenol A erhalten. Dabei können auch Gemische der Monomeren gleichzeitig oder nacheinander eingesetzt werden. Als geeignete Polyalkylenglykole können bspw. Polyethylenglykole, Polypropylenglykole (z.B. Voranol® -Typen der Fa. Dow, Acclaim® -Typen der Fa. Arco Chemical), gemischte Polyglykole auf Basis Ethylenoxid und Propylenoxid sowie Polytetramethylenglykole bzw. Polytetrahydrofurane (z.B. PolyTHF 2000 der Fa. BASF) verwendet werden. Bevorzugt werden lineare bzw. difunktionelle Polypropylenglykole mit einer mittleren Molekularmasse (Zahlenmittel Mₙ) von 1 000 bis 4 000 Dalton eingesetzt. Aliphatische oder aromatische Polyester-Polyole werden durch Polykoridensations-Reaktion und/oder Polyadditions-Reaktion aus zwei- oder mehrwertigen Alkoholen und zwei- oder mehrwertigen Carbonsäuren, Carbonsäureanhydriden oder Carbonsäureestern erhalten. Als geeignete aliphatische oder aromatische Polyester können bspw. Kondensate auf Basis von 1,2-Ethandiol bzw. Ethylenglykol, 1,4-Butandiol bzw. 1,4-Butylenglykol, 1,6-Hexandiol bzw. 1,6-Hexamethylenglykolund 2,2-Dimethyl-1,3-propandiol bzw. Neopentylglykol sowie 1,6-Hexandisäure bzw. Adipinsäure und 1,3-Benzoldicarbonsäure bzw. Isophthalsäure (z.B. Bester-Typen der Fa. Poliolchimica) eingesetzt werden. Bevorzugt werden lineare bzw. difunktionelle aliphatische oder aromatische Polyester-Polyole mit einer mittleren Molekularmasse (Zahlenmittel Mₙ) von 1 000 bis 4 000 Dalton. Polycaprolactone (z.B. Capa-Typen der Fa. Solvay Interox) und Polycarbonate (z.B. Desmophen C 200 der Fa. Bayer) sind ebenfalls zur Gruppe der Polyester zugehörig. Erstere werden durch Umsetzung von Phosgen bzw. aliphatischen oder aromatischen Carbonaten, wie bspw. Diphenylcarbonat oder Diethylcarbonat, mit zwei- oder mehrwertigen Alkoholen erhalten. Letztere werden durch Polyaddition von Lactonen, wie bspw. ε-Caprolacton, an Starter-Verbindungen mit reaktiven Wasserstoffatomen wie Wasser, Alkohole, Amine oder Bisphenol A hergestellt. Denkbar sind auch synthetische Kombinationen von Polyestern, Polycaprolactonen und Polycarbonaten. Ebenfalls geeignet sind Makromonomere, Telechele oder Epoxid-Harze. Bei den Makromonomeren und Telechelen handelt es sich um Polyhydroxyolefine, wie bspw. α, ω-Dihydroxypolybutadiene,α,β-Dihydroxypoly(meth)acrylate, α, ω-Dihydroxypoly(meth)acrylate (z.B. TEGO® Diol BD 1000, TEGO® Diol MD 1000 N, Fa. Th. Goldschmidt AG) oder α, ω- Dihydroxypolysiloxane. Bei den Epoxid-Harzen handelt es sich vorzugsweise um polyhydroxyfunktionelle Derivate des Bisphenol-A-diglycidethers (BADGE) .

Die Komponente (A) (ii) besteht aus mindestens einem niedermolekularen Polyol mit zwei oder mehreren gegenüber Polyisocyanaten reaktiven Hydroxyl-Gruppen und einer Molekularmasse von 60 bis 150 Dalton. Als geeignete niedermolekulare Polyole können bspw. 1,2-Ethandiol bzw. Ethylenglykol, 1,2-Propandiolbzw. 1,2-Propylenglykol, 1,3-Propandiol bzw. 1,3-Propylenglykol, 1,4-Butandiol bzw. 1,4-Butylenglykol, 1,6-Hexandiol bzw. 1,6-Hexamethylenglykol, 2-Methyl-1,3-propandiol (Handelsname MPDiol Glycol® der Fa. Arco Chemical), 2,2-Dimethyl-1,3-propandiolbzw. Neopentylglykol, 1,4-Bis-(hydroxymethyl)-cyclohexan bzw.Cyclohexandimethanol, 1,2,3-Propantriol bzw. Glycerol, 2-Hydroxymethyl-2-methyl-1,3-propanol bzw. Trimethylolethan, 2-Ethyl-2-hydroxymethyl-1,3-propandiol bzw. Trimethylolpropan, 2,2-Bis-(hydroxymethyl)-1,3-propandiol bzw. Pentaerythrit eingesetzt werden.

Die.Polyisocyanat-Komponente (B) besteht aus mindestens einem Polyisocyanat, Polyisocyanat-Derivat oder Polyisocyanat-Homologen mit zwei oder mehreren aliphatischen oder aromatischen Isocyanat-Gruppen. Geeignet sind insbesondere die in der Polyurethan-Chemie hinreichend bekannten Polyisocyanate oder Kombinationen daraus. Als geeignete aliphatische Polyisocyanate können bspw. 1,6-biisocyanatohexan (HDI), 1-Isocyanato-5-isocyanatomethyl-3,3,5-trimethyl-cyclohexan bzw. Isophorondiisocyanat (IPDI), Bis-(4-isocyanatocyclo-hexyl)-methan (H₁₂MDI), 1,3-Bis-(1-isocyanato-1-methyl-ethyl)-benzol (m-TMXDI) bzw. technische Isomeren-Gemische der einzelnen aromatischen Polyisocyanate eingesetzt werden. Als geeignete aromatische Polyisocyanate können beispielsweise 2,4-Diisocyanatotoluol bzw. Toluoldiisocyanat (TDI), Bis-(4-isocyanatophenyl)-methan (MDI) und ggf. dessen höhere Homologe (Polymeric MDI) bzw. technische Isomeren-Gemische der einzelnen aromatischen Polyisocyanate eingesetzt werden. Weiterhin sind auch die sogenannten "Lackpolyisocyanate" auf Basis von Bis-(4-isocyanatocyclohexyl)-methan (H₁₂MDI), 1,6-Diisocyanatohexan (HDI), 1-Isocyanato-5-isocyanatomethyl-3,3,5-trimethyl-cyclohexan (IPDI) grundsätzlich geeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Weiterhin werden Polyisocyanate mit Isocyanat-Gruppen unterschiedlicher Reaktivität bevorzugt.

In der nachfolgenden Reaktionssstufe a₂) erfolgt die Umsetzung des ganz oder teilweise abreagierten Polyurethan-Preadduks aus Stufe a₁) mit 0, 1 bis 2 Gew.-% der Komponente (A) (iii) zum entsprechenden Polyurethan-Prepolymer, wobei die vorzugsweise feingemahlene Polyol-Komponente (A) (iii) mit einer mittleren Teilchengröße < 150 µm innerhalb eines Zeitraumes von einigen Minuten bis zu einigen Stunden dem Polyurethan-Preaddukt aus Stufe a₁) zugesetzt bzw. zudosiert wird.

Die Komponente (A) (iii) besteht aus mindestens einem niedermolekularen und anionisch modifizierbaren Polyol mit zwei oder mehreren gegenüber Polyisocyanaten reaktiven Hydroxyl-Gruppen und einer oder mehreren gegenüber Polyisocyanaten inerten Carboxyl-Gruppen, die in Gegenwart von Basen ganz oder teilweise in Carboxylat-Gruppen überführt werden können. Als niedermolekulare und anionisch modifizierbare Polyole können bspw. 2-Hydroxymethyl-3-hydroxypropansäure bzw. Dimethylolessigsäure, 2-Hydroxymethyl-2-methyl-3-hydroxypropansäurebzw. Dimethylolpropionsäure, 2-Hydroxymethyl-2-ethyl-3-hydroxypropansäure bzw. Dimethylolbuttersäure,2-Hydroxymethyl-2-propyl-3-hydroxypropansäure bzw. Dimethylolvaleriansäure, Citronensäure, Weinsäure eingesetzt werden. Bevorzugt werden Bishydroxyalkancarbonsäuren mit einer Molekularmasse von 100 bis 200 Dalton eingesetzt und vorzugsweise 2-Hydroxymethyl-2-methyl-3-hydroxypropansäurebzw. Dimethylolpropionsäure (Handelsname DMPA® der Fa. Mallinckrodt).

In Reaktionsstufe a₂) wird das NCO/OH-Equivalentverhältnis des Polyurethan-Preadduktes aus Stufe a₁) und der Komponente (B) vorzugsweise auf einen Wert von 2,5 bis 5,0 eingestellt.

Die Durchführung der Reaktionsstufen a₁) und a₂) ist im Hinblick auf die Reaktionsbedingungen relativ unkritisch. Der Reaktions-Ansatz wird in den Reaktionsstufen a₁) und a₂) unter Ausnutzung der Exothermie der Polyadditions-Reaktion bis zum Erreichen des berechneten bzw. theoretischen NCO-Gehaltes vorzugsweise bei 60 bis 120 °C, insbesondere jedoch bei 80 bis 100 °C, unter Inertgas-Atmosphäre gerührt. Die erforderlichen Reaktions-Zeiten liegen im Bereich von einigen Stunden und werden durch Reaktions-Parameter wie die Reaktivität der Komponenten, die Stöchiometrie der Komponenten und die Temperatur beeinflußt. Das in Reaktionstufe a₂) eingesetzte Polyurethan-Preaddukt aus Stufe a₁) kann bei entsprechender Prozessführung bzw. unvollständiger Umsetzung neben Isocyanat-Gruppen ggf. auch noch freie Hydroxyl-Gruppen aufweisen.

Die Umsetzung der Komponenten (A) und (B) in den Reaktionsstufe a₁) und/oder a₂) kann in Gegenwart eines für Polyadditions-Reaktionen an Polyisocyanaten üblichen Katalysators erfolgen. Bei Bedarf erfolgt ein Zusatz dieser Katalysatoren in Mengen von 0,01 bis 1 Gew.-% bezogen auf die Komponenten (A) und (B). Gebräuchliche Katalysatoren für Polyadditions-Reaktionen an Polyisocyanate sind bspw. Dibutylzinnoxid, Dibutylzinndilaurat (DBTL), Triethylamin, Zinn(II)-octoat, 1,4-Diaza-bicyclo[2,2,2]octan (DABCO), 1,4-Diaza-bicyclo[3;2,0]-5-nonen (DEN), 1,5-Diaza-bicyclo[5,4,0]-7-undecen (DBU).

Das Polyurethan-Prepolymer aus den Komponenten (A) und (B) weist eine bevorzugte Säurezahl von 2,5 bis 25 mg KOH·g⁻¹ auf.

Das bevorzugte NCO/OH-Equivalent-Verhältnis der Gesamtmenge der Komponenten (A) (Polyole) und (B) (Polyisocyanate) wird auf einen Wert von 1,5 bis 2,5, insbesondere jedoch 1,8 bis 2,2, eingestellt.

Vorzugsweise werden Polyisocyanate mit Isocyanat-Gruppen unterschiedlicher Reaktivität eingesetzt, um engere Molekular-Massen-Verteilungen mit geringerer Uneinheitlichkeit zu erhalten. Dementsprechend werden Polyurethan-Prepolymere mit linearer Struktur bevorzugt, die sich aus difunktionellen Polyol- und Polyisocyanat-Komponenten zusammensetzen.

Die Viskosität der Polyurethan-Prepolymere ist relativ niedrig und weitgehend unabhängig von der Struktur der verwendeten Polyol- und Polyisocyanat-Komponenten. Ein Zusatz von Lösemitteln zur Viskositätsverminderung oder zur Verbesserung der Dispergier-Eigenschaften der Polyurethan-Prepolymere ist daher nicht erforderlich. Die besondere Struktur der Prepolymere ermöglicht die Herstellung von Produkten mit außerordentlich hohen Feststoff-Gehalten. Außerdem werden aufgrund der gleichmäßigen Verteilung der Carboxyl- bzw. Carboxylat-Gruppen über das Polyurethan-Polymer nur geringe Ladungsdichten für die Stabilisierung der entsprechenden Polyurethan-Basis-Dispersionen benötigt.

Das Polyurethan Prepolymer aus Stufe a₂) wird in der nachfolgenden Reaktions-Stufe a₃) mit 0,1 bis 1,5 Gew.-% einer Neutralisations-Komponente (C) zur vollständigen oder teilweisen Neutralisation der Carboxyl-Gruppen umgesetzt (direkte Neutralisation).

Die Neutralisations-Komponente (C) besteht aus einer oder mehreren Basen, die zur vollständigen oder teilweisen Neutralisation der Carboxyl-Gruppen dienen. Als geeignete Basen können tertiäre Amine wie N,N-Dimethylethanolamin, N-Methyl-diethanolamin, Triethanolamin, N,N-Dimethylisopropanolamin, N-Methyl-diisopropanolamin, Triisopropylamin, N-Methyl-morpholin, N-Ethyl-morpholin, Triethylamin, Ammoniak oder Alkalihydroxide wie Lithiumhydroxid, Natriumhydroxid, Kaliumhydroxid eingesetzt werden. Bevorzugt werden tertiäre Amine und insbesondere Triethylamin eingesetzt.

Die Neutralisations-Komponente (C) ist vorzugsweise in einer solchen Menge vorhanden, daß der Neutralisations-Grad bezogen auf die freien Carboxyl-Gruppen des Polyurethan-Prepolymers bei 70 bis 100 Equivalent-%, vorzugsweise bei 80 bis 90 Equivalent-%, liegt. Bei der Neutralisation werden aus den Carboxyl-Gruppen Carboxylat-Gruppen gebildet, die zur anionischen Modifizierung bzw. Stabilisierung der Polyurethan-Dispersion dienen. Die Reaktions-Stufe a₃) wird vorzugsweise bei einer Temperatur von 40 bis 60 °C, insbesondere bei ca. 50°C, durchgeführt.

Das neutralisierte Polyurethan-Prepolymer aus Stufe a₃) wird in der nachfolgenden Reaktions-Stufe a₄) in 10 bis 60 Gew.-% Wasser, das zur *in-situ* Formulierung ggf. noch 0,1 bis 70 Gew.-% einer Formulierungs-Komponente (F), bestehend aus z.B. Füllstoffen, Pigmenten, Weichmachern, Fasermaterialien und/oder sonstigen üblichen Additiven wie z.B. Dispergierhilfsmitteln, Rheologiehilfsmitteln, Entschäumern, Haftvermittlern, Frostschutzmitteln, Flammschutzmitteln, Antioxidantien, UV-Stabilisatoren, Bakteriziden, Fungiziden, Konservierungsmitteln oder weiteren Polymeren bzw. Polymer-Dispersionen und redispergierbaren Polymer-Pulvern enthält, dispergiert.

Die Formulierungs-Komponente (F) kann vor der Dispergierung gemäß Reaktionsstufe a₄) ganz oder teilweise in das Polyurethan-Prepolymer eingerührt werden, falls das Herstellungsverfahren dadurch nicht beeinträchtigt wird.

Alternativ dazu kann die Formulierungs-Komponente (F) bei konventioneller Formulierung erst nach Abschluß der Reaktionsstufe b₂) in die fertig hergestellte Polyurethan-Polymer-Hybrid-Dispersion ganz oder teilweise eingebracht werden.

Der Härtegrad des verwendeten Wassers ist für das Verfahren unerheblich, die Verwendung von destilliertem, deionisiertem bzw. demineralisiertem Wasser ist daher nicht erforderlich. Hohe Härtegrade bewirken eine weitere Verringerung der Wasseraufnahme der Polyurethan-Basis-Dispersionen und der Polyurethan-Polymer-Hybrid-Dispersionen, ohne deren Material-Eigenschaften negativ zu beinflussen.

Bei der Dispergierung wird das neutralisierte Polyurethan-Prepolymer in das Dispergier-Medium überführt und bildet dabei eine Polyurethan-Prepolymer-Dispersion aus. Das neutralisierte Polyurethan-Prepolymer bildet dabei Micellen, die an der Oberfläche stabilisierende Carboxylat-Gruppen und im Inneren reaktive Isocyanat-Gruppen aufweisen. Alle kationischen Gegen-Ionen zu den anionischen Carboxylat-Gruppen sind im Dispergier-Medium gelöst. Die Begriffe "Dispergierung" bzw. "Dispersion" beinhalten, daß neben dispergierten Komponenten mit micellarer Struktur auch solvatisierte und/oder suspendierte Komponenten enthalten sein können. Für die Überführung des Polyurethan-Prepolymers in die wäßrige Phase kann entweder das Polyurethan-Prepolymer in das Dispergier-Medium oder das Dispergier-Medium in das Polyurethan-Prepolymer (Invers-Verfahren) eingerührt werden. Die Reaktionsstufe a₄) wird vorzugsweise bei einer Temperatur von 30 bis 50 °C, insbesondere bei ca. 40 °C, durchgeführt.

Alternativ zu der beschriebenen Vorgehensweise können die Stufen a₃) und a₄) in der Weise zusammengefaßt werden, daß die Neutralisations-Komponente (C) dem Wasser zugesetzt wird, in dem das nicht neutralisierte Polyurethan-Prepolymer entsprechend Reaktionstufe a₄) dispergiert wird (Indirekte Neutralisation).

Die Polyurethan-Prepolymer-Dispersion aus Stufe a₄) wird in der anschließenden Reaktionsstufe a₅) mit 0,1 bis 2 Gew.-% einer Kettenverlängerungs-Komponente (D) und ggf. mit 0,05 bis 1 Gew.-% einer Kettenstopper- Komponente (E) umgesetzt. Der Anteil der Kettenstopper-Komponente (E) beträgt vorzugsweise weniger als 20 Gew.-%, insbesondere weniger als 10 Gew.-%, bezogen auf die Gesamtmenge der Komponenten (D) und (E). Die Reaktionsstufe a₄) wird bei einer bevorzugten Temperatur von 30 bis 50 °C, insbesondere bei ca. 40 °C, durchgeführt.

Die Kettenverlängerungs-Komponente (D) besteht aus mindestens einem Polyamin mit zwei oder mehreren gegenüber Polyisocyanaten reaktiven Amino-Gruppen. Geeignete Polyamine sind beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl) -2-aminoethanol, Addukte aus Salzen der 2-Acrylamido-2-methylpropan-1-sulfonsäure (AMPS) und Ethylendiamin, Addukte aus Salzen der (Meth)acrylsäure und Ethylendiamin oder beliebige Kombination dieser Polyamine. Bevorzugt werden difunktionelle primäre Amine und insbesondere Ethylendiamin eingesetzt.

Die Kettenstopper-Komponente (E) besteht aus mindestens einem Monoamin mit einer gegenüber Polyisocyanaten reaktiven Amino-Gruppe. Geeignete Monoamine sind beispielsweise Ethylamin, Diethylamin, n-Propylamin, Di-n-propylamin, Isopropylamin, Diisopropylamin, n-Butylamin, Di-n-butylamin, Ethanolamin, Diethanolamin, Isopropanolamin, Diisopropanolamin, Morpholin, Piperidin, Pyrrolidin oder beliebige Kombination dieser Polyamine. Bevorzugt werden monofunktionelle primäre Amine und insbesondere Isopropylamin eingesetzt.

Die Kettenverlängerungs-Komponente (D) wird gemäß einer bevorzugten Ausführungsform in einer solchen Menge eingesetzt, daß der Kettenverlängerungs-Grad bezogen auf die freien Isocyanat-Gruppen des Polyurethan-Prepolymers bei 50 bis 100 Equivalent-%, vorzugsweise bei 70 bis 80 Equivalent-%, liegt. Die Kettenstopper-Komponente (E) wird ggf. in einer solchen Menge eingesetzt, daß der Kettenstoppungs-Grad bezogen auf die freien Isocyanat-Gruppen des Polyurethan-Prepolymers bei 1 bis 20 Equivalent-%, vorzugsweise bei 5 bis 10 Equivalent-%, liegt. Bei Verwendung der Kettenverlängerungs-Komponente (D) und der Kettenstopper-Komponente (E) können die Komponenten entweder nacheinander oder gleichzeitig bzw. als Gemisch der Polyurethan-Prepolymer-Dispersion aus Stufe a₄) zugesetzt werden. Die Kettenverlängerungs-Komponente (D) und die Kettenstopper-Komponente (E) können in vorab entnommenen Anteilen des Wassers im Gewichtsverhältnis 1 : 1 bis 1 : 10 verdünnt werden, um die zusätzliche Exothermie durch die Hydratisierung der Amine zurückzudrängen.

Die Kettenverlängerung der Polyurethan-Prepolymer-Dispersion führt zum Aufbau der Molekularmasse innerhalb der Micellen und zur Bildung einer Polyurethän-Polyharnstoff-Dispersion hoher Molekularmasse. Die Kettenverlängerungs-Komponente (D) reagiert dabei mit reaktiven Isocyanat-Gruppen wesentlich rascher als Wasser. Die Kettenstoppung der Polyurethan-Prepolymer-Dispersion führt zum Abbruch des Aufbaus der Molekularmasse innerhalb der Micellen und zur Bildung einer Polyurethan-Polyharnstoff-Dispersion mit geringerer Molekular-Masse. Die Kettenstopper-Komponente (E) reagiert dabei mit reaktiven Isocyanat-Gruppen wesentlich rascher als Wasser. Im Anschluß an die Reaktions-Stufe a₅) werden evtl. noch vorhandene freie Isocyanat-Gruppen mit Wasser vollständig kettenverlängert.

Der Festkörper-Gehalt an Polyurethan-Polymer bestehend aus den Komponenten (A) bis (E) wird insbesondere auf 40 bis 70 Gew.-%, vorzugsweise auf 50 bis 60 Gew.-%, bezogen auf die Gesamtmenge der reinen Polyurethan-Basis-Dispersion eingestellt. Der Festkörper-Gehalt an Polyurethan-Polymer bestehend aus den Komponenten (A) bis (E) wird insbesondere auf 10 bis 50 Gew.-%, vorzugsweise auf 20 bis 40 Gew.-%, und der Feststoff-Gehalt an Formulierungs-Komponente (F) insbesondere auf 10 bis 70 Gew.-%, vorzugsweise auf 20 bis 60 Gew.-%, bezogen auf die Gesamtmenge der *in-situ* oder konventionell formulierten Polyurethan-Basis-Dispersion eingestellt.

Der Gehalt an Carboxylat-Gruppen im Polyurethan-Polymer aus den Komponenten (A) bis (E) wird insbesondere auf 10 bis 40 meq· (100 g)⁻¹, vorzugsweise auf 15 bis 35 meq· (100 g)⁻¹, eingestellt. Das Polyurethan-Polymer aus den Komponenten (A) bis (E) weist eine bevorzugte Säurezahl von 5 bis 25 mg KOH·g⁻¹, insbesondere 7,5 bis 22,5 mg KOH·g⁻¹, auf.

Das Polyurethan-Polymer weist in der Regel eine mittlere Molekularmasse von 25 000 bis 250 000 Dalton auf. Die entsprechenden Angaben beziehen sich auf das Zahlenmittel Mₙ und Messungen mit Hilfe der Gelpermeationschromatographie (GPC).

Die mittlere Partikelgröße der Micellen des Polyurethan-Polymers beträgt insbesondere 100 bis 500 nm, vorzugsweise 200 bis 400 nm. Die entsprechenden Angaben beziehen sich auf Messungen mit Hilfe der Photonenkorrelationsspektroskopie (PCS).

Die Viskosität nach Brookfield der Polyurethan-Basis-Dispersion beträgt vorzugsweise weniger als 300 mPa·s, insbesondere weniger als 150 mPa·s (LV, 20 °C, Spindel 1, 60 rpm)

Zur weiteren Durchführung dieses Verfahrens wird unter Anwendung der bei Polymerisationen üblichen Techniken in der Reaktionsstufe b₁) die Polyurethan-Basis-Dispersion aus Stufe a₅) mit einem vorgefertigten Gemisch aus 3 bis 60 Gew. -% der Monomer-Komponente (G) und 0,01 bis 1 Gew.-% der Initiator-Komponente (H) versetzt. Das Initiator/Monomer-Molverhältnis der Komponenten (H) und (G) wird vorzugsweise im Bereich von 0,001 bis 0,05 eingestellt. Die Reaktionsstufe b₁) wird vorzugsweise bei einer Temperatur von 15 bis 35 ° C, insbesondere bei 20 bis 30 °C, durchgeführt. Gemäß einer bevorzugten Ausführungsform wird ein Teil des Wassers aus Stufe a₄) erst in Stufe b₁) zur Einstellung des Festkörper-Gehaltes zugegeben.

Die Monomer-Komponente (F) besteht aus einem oder mehreren Monomeren mit einer oder mehreren radikalisch polymerisierbaren Doppelbindungen.

Geeignete Monomere sind beispielsweise Acrylsäure und deren Derivate wie Acrylsäureamid, Acrylsäuredimethylamid, Acrylsäurenitril, Acrylsäuremethylester, Acrylsäureethylester, Acrylsäurevinylester, Acrylsäurepropylester, Acrylsäureisopropylester, Acrylsäurebutylester, Acrylsäureisobutylester, Acrylsäure-tert.-butylester, Acrylsäurehexylester, Acrylsäurecyclohexylester, Acrylsäureoctylester, Acrylsäure-(2-ethylhexylester), Acrylsäure-(3,3,5 trimethylhexylester), Acrylsäuredodecylester, Acrylsäureisododecylester, Acrylsäureoctadecylester sowie Acrylsäure-(2-hydroxyethylester), Acrylsäure-(hydroxyproylester) (Isomeren-Gemisch), Acrylsäure-[(2-dimethylamino)-ethylester], Acrylsäure-[(3-dimethylamino)-propylester], Acrylsäure-(3-sulfopropylester) Kaliumsalz; Methacrylsäure und deren Derivate wie Methacrylsäure, Methacrylsäureanhydrid, Methacrylsäureamid, Methacrylsäuredimethylamid, Methacrylsäurenitril, Methacrylsäuremethylester, Methacrylsäureethylester, Methcrylsäurevinylester, Methacrylsäurepropylester, Methacrylsäureisopropylester, Methacrylsäurebutylester, Methacrylsäureisobutylester, Methacrylsäure-tert.-butylester, Methacrylsäurehexylester, Methacrylsäurecyclohexylester Methacrylsäureoctylester, Methacrylsäure-(2-ethylhexylester), Methacrylsäuredodecylester, Methacrylsäureisododecylester, Methacrylsäureoctadecylester, Methacrylsäurebenzylester sowie Methacrylsäure- (2-hydroxyethylester), Methacrylsäure-(hydroxyproylester) (Isomeren-Gemisch), Methacrylsäure-[(2-dimethylamino)-ethylester], Methacrylsäure-2,3-epoxypropylester, Methacrylsäure-[2-(acetoacetoxy) -ethylester],Methacrylsäure- (3-sulfopropylester) Kaliumsalz, 2-Acrylamido-2-methylpropan-1-sulfonsäure (AMPS) und deren Salze; oder aber Styrol und dessen Derivate wie Methylstyrol, Ethylstyrol, Divinylbenzol. Daneben können auch noch (Meth)acrylsäureester mit einer radikalisch polymerisierbaren Doppelbindung auf Basis von Methoxypolyethylenglykol, (Meth)acrylsäureester mit zwei oder mehreren radikalisch polymerisierbaren Doppelbindungen auf Basis von niedermolekularen und/oder hochmolekularen polymeren Polyolen oder aber Vinyltriisopropoxysilan (CoatOSil® 1706, Fa. Witco) und gamma- Methacryloyloxypropyltriisopropoxysilan (CoatOSil® 1757, Fa. Witco) eingesetzt werden. Grundsätzlich ebenfalls geeignet sind Vinylhalogenide wie Vinylchlorid, Vinylester wie Vinylacetat, 1,3-Butadien, Isopren sowie Maleinsäureanhydrid und dessen Derivate. Bevorzugt werden Acrylsäure und deren Derivate und/oder Methacrylsäure und deren Derivate und/oder Styrol und dessen Derivate eingesetzt, vorzugsweise jedoch Kombinationen aus 5 bis 95 Gew.-% Methylmethacrylat und 5 bis 95 Gew.-% n-Butylacrylat oder Kombinationen aus 5 bis 25 Gew.-% an Hydroxyalkylestern der Acrylsäure und/oder Methacrylsäure und 75 bis 95 Gew.-% an weiteren Monomeren mit einer oder mehreren radikalisch polymerisierbaren Doppelbindungen.

Die Initiator-Komponente (G) besteht aus mindestens einem lipophilen Radikal-Initiator, der bei einer Zerfallstemperatur im Bereich von 40 bis 120 °C eine Halbwertszeit von einer Stunde aufweist.

Geeignete Initiatoren sind beispielsweise anorganische Peroxide wie Ammoniumperoxodisulfat, Natriumperoxodisulfat, Kaliumperoxodisulfat, Wasserstoffperoxid, organische Peroxide wie Percarbonate, Diacylperoxide wie Dibenzoylperoxid, Alkylperoxide wie tert.-Butylhydroperoxid, Cumolhydroperoxid, Dialkylperoxide wie Di-tert.-butylperoxid, Acylalkylperoxide wie tert. Butylperoxybenzoat, Azo-Initiatoren wie 2,2'-Azobis(2-methylbutyronitril), 2,2'-Azobis(2-methylpropionitril) bzw. 2,2'-Azoisobutyronitril. Bevorzugt werden Radikal-Initiatoren mit einer oder mehreren Azo- oder Peroxogruppen, die bei einer Zerfallstemperatur von 70 bis 90°C eine Halbwertszeit von 1 Stunde aufweisen, eingesetzt. Besonders bevorzugt wird 2,2'-Azoisobutyronitril eingesetzt.

In der nachfolgenden Reaktionssstufe b₂) wird durch den thermischen Zerfall der Komponente (H) eine radikalische Polymerisation der Komponente (G) innerhalb der Mizellen der Polyurethan-Basis-Dispersion durchführt. Die Reaktionsstufe b₂) wird vorzugsweise bei einer Temperaturdifferenz von ± 10°C bezogen auf die Temperatur, bei der die Komponente (H) eine Halbwertszeit von 1 Stunde aufweist, durchgeführt. Bei Verwendung von 2,2' -Azobisisobutyronitril als Komponente (H) wird die Reaktionsstufe b₂) vorzugsweise bei einer Temperatur von 80 ± 10 °C durchgeführt. Die Emulsionspolymerisation in der Reaktionsstufe b₂) wird vorzugsweise ohne weitere Emulgatoren durchgeführt. Nach beendeter Polymerisation wird die fertige Polyurethan-Polymer-Hybrid-Dispersion gemäß einer bevorzugten Ausführungsform abgekühlt und über ein 100 µm-Sieb filtriert, evtl. vorhandener erhärteter Schaum wird dabei vollständig abgetrennt.

Der Vorteil dieser Herstellungsmethode liegt darin, daß Monomere und Initiator zusammen bei Raumtemperatur zugegeben werden können und daß für deren Stabilisierung in der Polyurethan-Basis-Dispersion keinerlei zusätzliche Emulgatoren (Surfactants) notwendig sind.

Die Monomeren und der Initiator werden durch die Micellen der Polyurethan-Dispersion emulgiert. Bei der radikalischen Polymerisation wird innerhalb der Micellen ein *interpenetrating network* aus Polyurethan-Harzen und Polymer-Harzen gebildet, die durch eine physikalische Vernetzung miteinander verbunden sind.

Bei der Hybridisierung verringert sich die Ladungsdichte bzw. die Zahl der Carboxylat-Gruppen im Polyurethan-Polymer-Hybrid [meq· (100 g)⁻¹] üblicherweise beträchtlich. Die Ladungsdichte der Mizellen der Polyurethan-Basis-Dispersion bzw. der anionisch modifizierten Polyurethan-Polymeren ist in jedem Fall ausreichend groß, um zusätzlich sowohl die Monomeren als auch die aus den Monomeren hergestellten Polymeren ausreichend stabilisieren zu können. Die Lagerstabilität der Polyurethan-Polymer-Hybrid-Dispersionen über längere Zeiträume ist daher gewährleistet. Die Filme der Polyurethan-Polymer-Hybrid-Dispersionen weisen im Vergleich mit den Filmen der zugrundeliegenden Polyurethan-Basis-Dispersionen eine deutlich verringerte Hydrophilie auf und sind demgemäß durch Wasser weniger anquellbar.

Das reine Polymer aus den Komponenten (G) und (H) in Stufe b₂) weist eine bevorzugte Glasübergangstemperatur von - 50 bis + 100 °C, insbesondere - 25 bis + 25 °C, auf. Die Berechnung erfolgt mit Hilfe der Fox-Gleichung.

Der Festkörper-Gehalt an Polyurethan-Polymer-Hybrid bestehend aus den Komponenten (A) bis (E), (G) und (H) wird insbesondere auf 40 bis 70 Gew.-%, vorzugsweise auf 50 bis 60 Gew.-%, bezogen auf die Gesamtmenge der reinen Polyurethan-Polymer-Hybrid-Dispersion eingestellt. Das Verhältnis der anteiligen Festkörper-Gehalte aus Polyurethan-Harz aus den Komponenten (A) bis (E) und Polymer-Harz aus den Komponenten (G) und (H) wird vorzugsweise auf 20 zu 80 bis 80 zu 20 Gew.-%, insbesondere auf 40 zu 60 bis 60 zu 40 Gew.-%, eingestellt. Der Festkörper-Gehalt an Polyurethan-Polymer-Hybrid bestehend aus den Komponenten (A) bis (E), (G) und (H) wird insbesondere auf 10 bis 50 Gew.-%, vorzugsweise auf 20 bis 40 Gew.-%, und der Feststoff-Gehalt an Formulierungs-Komponente (F) insbesondere auf 10 bis 70 Gew.-%, vorzugsweise auf 20 bis 60 Gew.-%, bezogen auf die Gesamtmenge der *in-situ* oder konventionell formulierten Polyurethan-Polymer-Hybrid-Dispersion eingestellt.

Der Gehalt an Carboxylat-Gruppen im Polyurethan-Polymer-Hybrid aus den Komponenten (A) bis (E) wird insbesondere auf 5 bis 20 meq· (100 g)⁻¹, vorzugsweise auf 10 bis 15 meq· (100 g)⁻¹ eingestellt. Das Polyurethan-Polymer aus den Komponenten (A) bis (E) weist eine bevorzugte Säurezahl von von 2,5 bis 12,5 mg KOH· g⁻¹, insbesondere 5 bis 10 mg KOH· g⁻¹, auf.

Das Polyurethan-Polymer-Hybrid weist in der Regel eine mittlere Molekularmasse von 100 000 bis 500 000 Dalton auf. Die entsprechenden Angaben beziehen sich auf das Zahlenmittel Mₙ und Messungen mit Hilfe der Gelpermeationschromatographie (GPC).

Die mittlere Partikelgröße der Micellen des Polyurethan-Polymer-Hybrids beträgt insbesondere 50 bis 500 nm, vorzugsweise 100 bis 400 nm. Die entsprechenden Angaben beziehen sich auf Messungen mit Hilfe der Photonenkorrelationsspektroskopie (PCS).

Die Viskosität nach Brookfield der Polyurethan-Polymer-Hybrid-Dispersion beträgt vorzugsweise weniger als 200 mPa·s, insbesondere weniger als 100 mPa·s (LV, 20 °C, Spindel 1, 60 rpm).

Die Polyurethan-Polymer-Hybrid-Dispersion aus den Komponenten (A) bis (E), (G) und (H) weist bei einer Auftragsmenge von 0,8 bis 1,6 kg m⁻² nach 2 d Trocknung bei 23 °C und 50 % relativer Luftfeuchtigkeit sowie 7 d Wasserlagerung bei 23 °C eine bevorzugte Wasseraufnahme von 1 bis 25 Gew-% an destilliertem Wasser auf.

Der bevorzugte Restmonomer-Gehalt beträgt weniger als 0,1 Gew. -% bezogen auf die Gesamtmenge der Polyurethan-Polymer-Hybrid-Dispersion. Die entsprechenden Angaben beziehen sich auf Messungen mit Hilfe der Gaschromatographie (GC Headspace).

Die Material-Eigenschaften der aus den Polyurethan-Basis-Dispersionen hergestellten Filme sind exzellent. Bedingt durch die ideal linear segmentierte Struktur der Polyurethan-Polymeren resultiert intermolekular eine sehr ausgeprägte und regelmäßige Domänen-Struktur aus Hart-Segmenten und Weich-Segmenten. Hart-Segmente bestehen aus Struktur-Elementen mit starren Urethan- und Harnstoff-Gruppen, die eine starke interchenare Wechselwirkung ausüben. Weich-Segmente bestehen aus flexiblen Struktur-Elementen mit Carbonat-, Ester- und Ether-Gruppen, die eine schwache interchenare Wechselwirkung ausüben. Die Polyurethan-Basis-Dispersion weist aufgrund ihres Herstellverfahrens eine ideal linear segmentierte Struktur auf. Der Ausdruck "ideal linear segmentierte Struktur" kennzeichnet hierbei, daß das Polyurethan-Polymer einen linearen Aufbau besitzt und alle Aufbau-Komponenten in regelmäßiger Sequenz enthält, woraus die besonderen Material-Eigenschaften der Polyurethan-Basis-Dispersion resultieren. Die excellenten Material-Eigenschaften der Polyurethan-Basis-Dispersionen werden bei geeigneter Prozeßführung auf die Polyurethan-Polymer-Hybrid-Dispersionen übertragen. Je nach Wahl der Polyurethan-Basis-Dispersionen und der Monomer-Komponente können Dehnung und Zugfestigkeit über weite Bereiche nahezu beliebig variiert werden. Durch die geringe Ladungsdichte wird die Hydrophilie der unformulierten und formulierten Polyurethan-Polymer-Hybrid-Dispersion auf ein Minimum reduziert. Gerade in bauchemischen Anwendungen werden Bindemittel mit hoher Elastizität benötigt, die im formulierten Zustand nicht zur Versprödung neigen und einer permanenten Wasserbelastung widerstehen können

Das erfindungsgemäß verwendete Verfahren, das als *High Solids Zero VOC Process* bezeichnet wird, stellt eine universelle Methode zur Herstellung von maßgeschneiderten Polyurethan-Basis-Dispersionen und Polyurethan-Polymer-Hybrid-Dispersionen dar. Die geringen technischen Anforderungen des Verfahrens und der völlige Verzicht auf flüchtige und/oder nichtflüchtige organische Lösemittel ermöglichen hohe Raum/Zeit-Ausbeuten bei niedrigen Kosten. Die Performance der erfindungsgemäßen Polyurethan-Polymer-Hybrid-Dispersionen hinsichtlich Lösemittel-Freiheit, Festkörper-Gehalt, Material-Eigenschaften und Wasserfestigkeit ist bemerkenswert. Hervorzuheben sind außerdem die Reproduzierbarkeit des Verfahrens und die Lagerstabilität der Produkte.

Bei den *in-situ* oder konventionell formulierten Polyurethan-Polymer-Hybrid-Dispersionen werden außerordentlich hohe Feststoff-Gehalte bei vergleichsweise niedrigen Viskositäten erzielt. Die Formulierung kann dabei in das Herstellungs-Verfahren der Polyurethan-Basis-Dispersion ganz oder teilweise integriert werden oder ganz oder teilweise nach der Fertigstellung der Polyurethan-Polymer-Hybrid-Dispersion erfolgen.

Die erfindungsgemäßen Polyurethan-Polymer-Hybrid-Dispersionen zeichnen sich durch vollständige Lösemittel-Freiheit, außerordentlich hohe Festkörper-Gehalte bei vergleichsweise niedrigen Viskositäten, ausgezeichnete Material-Eigenschaften (wie z. B. Dehnung, Zugfestigkeit) und ein technisch einfaches Herstellungsverfahren aus.

Die erfindungsgemäße lösemittelfreie Polyurethan-Polymer-Hybrid-Dispersion ist im Vergleich zu den aus dem Stand der Technik bekannten Produkten verfahrenstechnisch weniger aufwendig, von der Stoffzusammensetzung viel unkomplizierter aufgebaut und stellt somit ein kostengünstiges Bindemittel für bauchemische Anwendungen dar, das in seiner Performance und seinen Materialeigenschaften kommerziell verfügbare Produkte übertrifft.

Die vorliegende Erfindung betrifft weiterhin die Verwendung von lösemittelfreien Polyurethan-Polymer-Hybrid-Dispersionen in Formulierungen für Sportbodenbeläge.

Die erfindungsgemäß vorgeschlagenen wäßrigen Polyurethan-Polymer-Hybrid-Dispersionen eignen sich Bindemittel bei der Herstellung von Formulierungen für Sportbodenbeläge, insbesondere bei folgenden Anwendungen:
a) Als Bindemittel für Elastikschichten bestehend aus Gummigranulaten oder Fasern, die insbesondere aus SBR-, EPDM-, EVA- oder Recycling-Granulat der Körnung 0,5 bis 50 mm oder aus Fasern der Länge 0,1 bis 50 mm hergestellt sind. Ggf. können diese Elastikschichten noch mineralische Zuschlagstoffe der Körnung 1 bis 20 mm enthalten.
b) Als Haftvermittler oder Grundierung auf die Untergründe (wie z. B. Asphalt, zementgebundene Untergründe, Holz oder Holzestrich) von Sportbodenbelägen.
c) Für Spritzbeschichtungen auf elastischen (z. B. Gummigranulatmatten) oder starren Untergründen (z. B. Asphalt), die ggf. noch 5 bis 80 Gew.-% an Strukturfüllstoffen (wie z.B. SBR-, EPDM- oder PVC-Granulat, PU-Schnitzel) enthalten können.
d) Als Verlaufsbeschichtungen auf elastischen (z. B. Gummigranulatmatten) oder starren Untergründen (Asphalt oder Beton), wobei die Applikation ein- oder mehrschichtig sowie ggf. mit Einstreugranulat (insbesondere EPDM-Granulat, 1 bis 4 mm) erfolgen kann.
e) Als Spachtelmassen für den Porenverschluß von Untergründen (bspw. vorgefertigten oder ortseingebauten Gummigranulatbelägen) von Sportbodenbelägen für die nachfolgende Applikation einer Verlaufsbeschichtung oder. für die Konstruktion von wasserundurchlässigen Strukturspritzbeschichtungen.
f) Als Klebstoffe zur Verklebung von vorgefertigten Elastikschichten (z.B. vorgefertigte Gummigranulatmatten) auf Asphalt oder zementgebundenen Untergründen von Sportbodenbelägen.
g) Für die Versiegelung (ggf. in pigmentierter Form) von Sportbodenbelägen zur Erhöhung der Verschleißfestigkeit, Witterungsbeständigkeit, Farbtonbeständigkeit oder Chemikalienbeständigkeit bzw. zur Einstellung von Glanz und Rutschfestigkeit.

Durch Einsatz von UV-Stabilisatoren vom Typ der sterisch gehinderten Amine in Konzentrationen von 0,1 bis 1,0 Gew.-% bezogen auf die Gesamtmasse der Formulierung kann die Kreidungs- und Dauerwasserbeständigkeit (Warmwasser von ca. 50 °C) von Formulierungen auf Basis von Polyurethan-Polymer-Hybrid-Dispersionen wesentlich erhöht werden. Dies konnte eindeutig in einem speziell für diesen Zweck konzipierten Gerät in einem Extremklima (intensive UV-Strahlung, erhöhte Temperatur, gleichzeitige Beregnung) nachgewiesen werden. Auch bei auf gleiche Weise geschützten konventionellen (isocyanathaltige) Beschichtungen konnte eine deutliche Verbesserung erreicht werden.

Bei den verwendeten UV-Stabilisatoren handelt es sich um Systeme vom HALS-Typ (Hindered Amine Light Stabilizer); wie z.B 1,2,2,6,6-Pentamethyl-4-piperidinylester der Dekandisäure (HALS I) oder 2,2,6,6-Tetramethyl-1-isooctyloxy-4-piperidinylester der Dekandisäure (HALS II). Bevorzugt werden HALS-I-Typen eingesetzt. In Kombination mit UV-Stabilisatoren vom HALS-Typ können daneben auch UV-Absorber, wie z.B. substituierte Hydroxyphenylbenzotriazole, Hydroxybenzophenone, Hydroxyphenyl-s-triazine, und Antioxantidantien, wie z.B.substituierte 2,6-Di-tert-butylphenole, verwendet werden.

Die erfindungsgemäß formulierten Polyurethan-Polymer-Hybrid-Dispersionen können hierbei je nach Anwendung in Schichten mit einer Gesamtdicke von 0,1 bis 50 mm auf die elastischen oder starren Untergründe aufgebracht werden. Hierzu sind in der Regel 0,1 bis 10,0 kg der formulierten Polyurethan-Polymer-Hybrid-Dispersion pro m² der zu beschichtenden Fläche und pro Arbeitsgang notwendig.

Obgleich die erfindungsgemäß formulierte Polyurethan-Polymer-Hybrid-Dispersion in ein- und zweikomponentiger Form zum Einsatz kommen kann, ist die einkomponentige Form wegen der besseren Handhabbarkeit als bevorzugt anzusehen. Im Falle einer zweikomponentigen Applikation werden die erfindungsgemäß formulierten lösemittelfreien Polyurethan-Polymer-Hybrid-Dispersionen als Bindemittel-Komponente und wasseremulgierbare Polyisocyanate als Härter-Komponente eingesetzt.

Darüber hinaus ist es prinzipiell auch möglich, daß die erfindungsgemäßen Formulierungen auf Basis von Polyurethan-Polymer-Hybrid-Dispersionen mit Formulierungen auf Basis von lösemittelfreien Polyurethan-Dispersionen, Polymer-Dispersionen, redispergierbaren Polymer-Pulvern oder nichtwäßrigen Polymeren zu kombinieren. Derartige lösemittelfreie Polyurethan-Dispersionen werden in der deutschen Patentanmeldung DE 198 12 751.0 beschrieben. Formulierungen auf Basis dieser lösemittelfreie Polyurethan-Dispersionen werden in der deutschen Patentanmeldung DE 198 33 819.8 beschrieben.

Neben dieser verbesserten Verarbeitbarkeit sowie der sehr guten Umweltverträglichkeit ermöglichen die erfindungsgemäß vorgeschlagenen Polyurethan-Polymer-Hybrid-Dispersionen noch folgende vorteilhafte Produkteigenschaften im Hinblick auf die entsprechenden Sportbodenbeläge:
- Mechanische Eigenschaften (Zugfestigkeit, Dehnung) von Produktfilmen sind wider Erwarten mindestens gleich, im allgemeinen sogar deutlich besser als bei isocyanathaltigen Systemen.
- Alle Systeme zeigen eine sehr gute UV- und Farbstabilität, so daß bei nicht überschichteten, farbigen Elastikschichten auf eine Versiegelung verzichtet werden kann. Marktübliche, konventionelle Systeme zeigen eine deutlich verringerte UV- und Witterungsbeständigkeit.
- Bei der Applikation können höhere Schichtdicken aufgetragen werden als bei isocyanathaltigen luftfeuchtigkeitshärtenden Systemen.
- Die Viskosität besitzt eine geringere Temperaturabhängigkeit als dies bei konventionellen Systemen der Fall ist.
- Die Hydrolysestabilität ist auch ohne Nachvernetzung unerwartet hoch.
- Uneingeschränkte Haftung innerhalb der einzelnen Schichten der oben genannten Systeme ist gegeben.
- Verglichen mit herkömmlichen Systemen ist eine höhere Farbbrillianz bei geringerer Neigung zur Kreidung zu verzeichnen.
- Die Formulierungen für Haftvermittler, Verlaufsbeschichtung, Spritzbeschichtung, Bindemittel, Klebstoff und Spachtelmaterial wurden im Aussenbereich verarbeitet. Haltbarkeit, UV-Beständigkeit, Lagenhaftung, Wasserbeständigkeit, witterungsbeständigkeit etc. konnten in der Realität beurteilt werden. Die im Labor erhaltenen Ergebnisse konnten bestätigt werden.
- Bei der Strukturspritzbeschichtung erfolgt die Trocknung eines Spritzganges (ca. 2 - 6 h je nach Bedingungen) signifikant schneller als bei marktüblichen lösemittel- und isocyanathaltigen Strukturspritzbeschichtungen (∼ 24 h). Dies hat zur Konsequenz, daß Flächen geeigneter Grösse problemlos an einem Tag in zwei Spritzgängen beschichtet werden können. Für den Verarbeiter bedeutet dies eine enorme Zeitersparnis, woraus eine Verbilligung des Einbaus resultiert. Dies ist besonders für Kleinflächen (< 2000 m²) von großer Bedeutung.
- Die außerordentlich guten mechanischen Eigenschaften der Beschichtungen auf Basis Polyurethan-Polymer-Hybrid-Dispersionen erlauben auch die Konzipierung neuer Systeme mit deutlich geringeren Schichtstärken für den Sportaußen- und -innenbereich.

Die erfindungsgemäßen Polyurethan-Polymer-Hybrid-Dispersionen können zudem im Baubereich als einkomponentige, isocyanatfreie und lösemittelfreie Bindemittel bzw. Fertig-Produkte eingesetzt werden. Bei diesen bauchemischen Anwendungen handelt es sich um Beschichtungen, Dichtstoffe, Klebstoffe, Lacke oder Membranen für die Oberflächen von mineralischen Baustoffen wie Beton, Gips, Zement, sowie Glas, Holz, Papier, Metall oder Kunststoff. Die Applikation der erfindungsgemäßen Polyurethan-Dispersionen erfolgt mit den aus der Lacktechnologie bekannten Methoden, wie z.B. Fluten, Gießen, Rakeln, Spritzen, Streichen, Tauchen, Walzen.

Die nachfolgenden Beispiele sollen die Erfindung näher veranschaulichen.

### Herstellungsbeispiele A

### Beispiel A.1

### Lösemittelfreie Polyurethan-Basis-Dispersion (Basis: Polypropylenglykol der Molekularmasse 2000 Dalton)

In einem Vierhalskolben ausgerüstet mit KPG-Rührer, Rückflußkühler, Thermometer und Stickstoff-Deckung wird ein Gemisch aus 100,00 g eines Polypropylenglykols mit einer Hydroxyl-Zahl von 56,1 mg KOH· g⁻¹ (Handelsname Acclaim® 2200 der Fa. Arco Chemical, low monol type) und 35,49 g Isophorondiisocyanat (Handelsname Vestanat IPDI der Fa. Degussa-Hüls) unter Stickstoff-Deckung 2 h bei 80 - 90 °C in Gegenwart von 0.1 g Dibutylzinndilaureat (DBTL) als Katalysator gerührt. Nach Zugabe von 4,00 g fein gemahlener Dimethylolpropionsäure (Handelsname DMPA® der Fa. Mallinckrodt) zu dem Preaddukt wird die Mischung unter Stickstoff-Deckung bei 80 - 90 °C weiter gerührt, bis der berechnete NCO-Gehalt erreicht wird (Theorie: 4,81 Gew.-%, NCO/OH = 2,00). Der Verlauf der Reaktion wird acidimetrisch verfolgt.
Nach dem Abkühlen auf 60°C wird das Prepolymer mit 2,72 g (90 Equivalent-%) an Triethylamin direkt neutralisiert. 142,21 g des Prepolymers werden dann unter intensivem Rühren in 146,04 g Wasser dispergiert und anschließend zum Aufbau der Polyurethan-Dispersion mit 3,83 g (80 Equivalent-%) an Ethylendiamin kettenverlängert.
Es wird eine stabile Polyurethan-Dispersion mit folgender Charakteristik erhalten:

| Aussehen | milchig-weiße Flüssigk. |
|---|---|
| Feststoff-Gehalt | ca. 50 Gew.-% |
| pH | 7,5 |
| Viskosität - Brookfield | 172 mPa·s (20°C) |
| Mittlere Partikel-Größe | 309 nm |
| Ladungsdichte | 18,4 meq· (100 g)⁻¹ |

### Beispiel A.2

### Lösemittelfreie Polyurethan-Polymer-Hybrid-Dispersion (n-Butylacrylat : Methymethacrylat = 70 : 30, T_{g} = - 22 °C)

In einem Doppelmantelgefäß ausgerüstet mit Thermostat, Rührwerk, Rückflußkühler und Innenthermometer werden 292,08 g der lösemittelfreien Polyurethan-Basis-Dispersion aus Beispiel A.1 vorgelegt und mit 146,04 g Wasser verdünnt. In einem separaten Gefäß wird ein Gemisch aus 101.09 g n-Butylacrylat, 43,33 g Methylmethacrylat und 1,62 g 2,2'-Azoisobutyronitril (Initiator/Monomer-Molverhältnis 0,00808) hergestellt und mit Hilfe einer Dosierpumpe während 1 h der verdünnten Polyurethan-Basis-Dispersion hinzugefügt. Das Reaktionsgemisch wird dann langsam auf 50 bis 60 °C aufgeheizt, nach dem Anspringen der Polymerisations-Reaktion wird weitere 5 h bei 80 bis 90 °C gerührt. Es wird eine stabile Polyurethan-Polymer-Hybrid-Dispersion mit folgender Charakteristik erhalten:

| Aussehen | milchig-weiße Flüssigk. |
|---|---|
| Feststoff-Gehalt | ca. 50 Gew.-% |
| pH | 7,5 |
| Viskosität - Brookfield | 98,5 mPa· s (20°C) |
| Mittlere Partikel-Größe | 204 nm |
| Ladungsdichte | 9,2 meq·(100 g)⁻¹ |

### Beispiel A.3

### Lösemittelfreie Polyurethan-Polymer-Hybrid-Dispersion (n-Butylacrylat : Methymethacrylat = 65 : 35, T_{g} = -16 °C)

Die Durchführung erfolgt in Analogie zu Beispiel A.2. Eingesetzt werden 93,87 g n-Butylacrylat, 50,55 g Methylmethacrylat und 1,62 g 2,2'-Azoisobutyronitril (Initiator/Monomer-Molverhältnis 0,00798).
Es wird eine stabile Polyurethan-Polymer-Hybrid-Dispersion mit folgender Charakteristik erhalten:

| Aussehen | milchig-weiße Flüssigk. |
|---|---|
| Feststoff-Gehalt | ca. 50 Gew.-% |
| pH | 7,5 |
| Viskosität - Brookfield | 103,0 mPa·s (20°C) |
| Mittlere Partikel-Größe | 204 nm |
| Ladungsdichte | 9, 2 meq· (100 g)⁻¹ |

### Beispiel A.4

### Lösemittelfreie Polyurethan-Polymer-Hybrid-Dispersion (n-Butylacrylat : Methymethacrylat = 60 : 40, T_{g} = - 10 °C)

Die Durchführung erfolgt in Analogie zu Beispiel A.2. Eingesetzt werden 86,65 g n-Butylacrylat, 57,77 g Methylmethacrylat und 1,62 g 2,2'-Azoisobutyronitril (Initiator/Monomer-Molverhältnis 0,00788).
Es wird eine stabile Polyurethan-Polymer-Hybrid-Dispersion mit folgender Charakteristik erhalten:

| Aussehen | milchig-weiße Flüssigk. |
|---|---|
| Feststoff-Gehalt | ca. 50 Gew.-% |
| pH | 7,5 |
| Viskosität - Brookfield | 103,5 mPa·s (20°C) |
| Mittlere Partikel-Größe | 191 nm |
| Ladungsdichte | 9,2 meq· (100 g)⁻¹ |

**Tabelle 1: Materialeigenschaften von lösemittelfreien Polyurethan-Polymer-Hybrid-Dispersionen**

| Beispiel | A.1 | A.2 | A.3 | A.4 |
|---|---|---|---|---|
| | PUD | PUPHD | PUPHD | PUPHD |
| Spannung bei 100 % Dehnung σ₁₀₀ | 2,09 MPa | 1,11 MPa | 1,66 MPa | 2,13 MPa |
| Spannung bei 300 % Dehnung σ₃₀₀ | 3,95 MPa | 2,05 MPa | 3,30 MPa | 4,36 MPa |
| Spannung bei 500 % Dehnung σ₅₀₀ | 6,95 MPa | 3,16 MPa | 5,83 MPa | 8,20 MPa |
| Zugfestigkeit σ_{M} | 24,84 MPa | 6,26 MPa | 10,58 MPa | 13,30 MPa |
| Dehnung bei der Zugfestigkeit ε_{M} | 862 % | 790 % | 681 % | 643 % |
| Wasseraufnahme | ca. 27 Gew.-% | ca. 19 Gew.-% | ca. 19 Gew.-% | ca. 19 Gew.-% |

| | | | | |
|---|---|---|---|---|
| PUD = lösemittelfreie Polyurethan-Basis-Dispersion PUPHD = lösemittelfreie Polyürethan-Polymer-Hybrid-Diaperaion Material-Prüfung nach DIN EN-ISO 527-3: 500 µm Naßfilmstärke, 7 d Trocknung bei Normklima Wasseraufnahme (eigene Methode): Auftragsmenge 0,8 kg m⁻², 2 d Trocknung bei Normklima und 7 d Wasserlagerung bei 23 °C Normklima: 23 °C, 50 % relative Luftfeuchtigkeit | | | | |

### Beispiel A.5

### Lösemittelfreie Polyurethan-Basis-Dispersion (Basis: Polypropylenglykol der Molekularmasse 3000 Dalton)

In einem Vierhalskolben ausgerüstet mit KPG-Rührer, Rückflußkühler, Thermometer und Stickstoff-Deckung wird ein Gemisch aus 100,00 g eines Polypropylenglykols mit einer Hydroxyl-Zahl von 56,1 mg KOH·g⁻¹ (Handelsname Voranol® P2000 der Fa. Dow Chemical) und 26,75 g Isophorondiisocyanat (Handelsname Vestanat IPDI der Fa. Degussa-Hüls) unter Stickstoff-Deckung 2 h bei 80 bis 90 °C in Gegenwart von 0.1 g Dibutylzinndilaureat (DBTL) als Katalysator gerührt.
Nach Zugabe von 3,60 g fein gemahlener Dimethylolpropionsäure (Handelsname DMPA® der Fa. Mallinckrodt) zu dem Preaddukt wird die Mischung unter Stickstoff-Deckung bei 80 - 90 °C weiter gerührt, bis der berechnete NCO-Gehalt erreicht wird (Theorie: 3,88 Gew.-%, NCO/OH = 2,00). Der Verlauf der Reaktion wird acidimetrisch verfolgt.
Nach dem Abkühlen auf 60°C wird das Prepolymer mit 2,44 g (90 Equivalent-%) an Triethylamin direkt neutralisiert.
132,79 g des Prepolymers werden dann unter intensivem Rühren in 135,68 g Wasser dispergiert und anschließend zum Aufbau der Polyurethan-Dispersion mit 2,89 g (80 Equivalent-%) an Ethylendiamin kettenverlängert.
Es wird eine stabile Polyurethan-Basis-Dispersion mit folgender Charakteristik erhalten:

| Aussehen | milchig-weiße Flüssigk. |
|---|---|
| Feststoff-Gehalt | ca. 50 Gew.-% |
| pH | 7,5 |
| Viskosität - Brookfield | 254 mPa· s (20°C) |
| Mittlere Partikel-Größe | 345 nm |
| Ladungsdichte | 17,8 meq· (100 g)⁻¹ |

### Beispiel A.6

### Lösemittelfreie Polyurethan-Basis-Dispersion (n-Butylacrylat : Methylmethacrylat = 70 : 30, T_{g} = - 22 °C)

Die Durchführung erfolgt in Analogie zu Beispiel A.2. Eingesetzt werden 271,36 g der Polyurethan-Basis-Dispersion aus Beispiel A.5, 135,68 g Wasser, 93,92 g n-Butylacrylat, 40,25 g Methylmethacrylat und 1,51 g 2,2'-Azoisobutyronitril (Initiator/Monomer-Molverhältnis 0,00808).
Es wird eine stabile Polyurethan-Polymer-Hybrid-Dispersion mit folgender Charakteristik erhalten:

| Aussehen | milchig-weiße Flüssigk. |
|---|---|
| Feststoff-Gehalt | ca. 50 Gew.-% |
| pH | 7.5 |
| Viskosität - Brookfield | 105,5 mPa·s (20°C) |
| Mittlere Partikel-Größe | 217 nm |
| Ladungsdichte | 8, 9 meq· (100 g)⁻¹ |

### Beispiel A.7

### Lösemittelfreie Polyurethan-Basis-Dispersion (n-Butylacrylat : Methylmethacrylat = 65 : 35, T_{g} = - 16 °C)

Die Durchführung erfolgt in Analogie zu Beispiel A.2. Eingesetzt werden 271,36 g der Polyurethan-Basis-Dispersion aus Beispiel A.5, 135,68 g Wasser, 87,21 g n-Butylacrylat, 46,96 g Methylmethacrylat und 1,51 g 2,2'-Azoisobutyronitril (Initiator/Monomer-Molverhältnis 0,00798).
Es wird eine stabile Polyurethan-Polymer-Hybrid-Dispersion mit folgender Charakteristik erhalten:

| Aussehen | milchig-weiße Flüssigk. |
|---|---|
| Feststoff-Gehalt | ca. 50 Gew.-% |
| pH | 7.5 |
| Viskosität - Brookfield | 142,0 mPa·s (20°C) |
| Mittlere Partikel-Größe | 297 nm |
| Ladungsdichte | 8,9 meq· (100 g)⁻¹ |

### Beispiel A.8

### Lösemittelfreie Polyurethan-Basis-Dispersion (n-Butylacrylat : Methylmethacrylat = 60 : 40, T_{g} = 10 °C)

Die Durchführung erfolgt in Analogie zu Beispiel A.2. Eingesetzt werden 271,36 g der Polyurethan-Basis-Dispersion aus Beispiel A.5, 135,68 g Wasser, 80,50 g n-Butylacrylat, 53,67 g Methylmethacrylat und 1,51 g 2,2'-Azoisobutyronitril (Initiator/Monomer-Molverhältnis 0,00788).
Es wird eine stabile Polyurethan-Polymer-Hybrid-Dispersion mit folgender Charakteristik erhalten:

| Aussehen | milchig-weiße Flüssigk. |
|---|---|
| Feststoff-Gehalt | ca. 50 Gew.-% |
| pH | 7.5 |
| Viskosität - Brookfield | 143,5 mPa·s (20°C) |
| Mittlere Partikel-Größe | 298 nm |
| Ladungsdichte | 8,9 meq· (100 g) ⁻¹, |

**Tabelle 2: Materialeigenschaften von lösemittelfreien Polyurethan-Polymer-Hybrid-Dispersionen**

| Beispiel | A.5 PUD | A.6 PUPHD | A.7 PUPHD | A.8 PUPHD |
|---|---|---|---|---|
| Spannung bei 100 % Dehnung σ₁₀₀ | 1,17 MPa | 0,49 MPa | 0,78 MPa | 0,76 MPa |
| Spannung bei 300 % Dehnung σ₃₀₀ | 2,52 MPa | 1,14 MPa | 1,79 MPa | 1,80 MPa |
| Spannung bei 500 % Dehnung σ₅₀₀ | 3,84 MPa | 1,80 MPa | 3,43 MPa | 3,03 MPa |
| Zugfestigkeit σ_{M} | 12,69 MPa | 5,88 MPa | 8,72 MPa | 7,55 MPa |
| Dehnung bei der Zugfestigkeit ε_{M} | 1183 % | 1123 % | 960 % | 735 % |
| Wasseraufnahme | ca. 30 Gew.-% | ca. 20 Gew.-% | ca. 20 Gew.-% | ca. 20 Gew.-% |

| | | | | |
|---|---|---|---|---|
| PUD = lösemittelfreie Polyurethan-Basis-Dispersion PUPHD = lösemittelfreie Polyurethan-Polymer-Hybrid-Dispereion Material-Prüfung nach DIN EN-ISO 527-3: 500 µm Naßfilmstärke, 7 d Trocknung bei Normklima Wasseraufnahme (eigene Methode): Auftragsmenge 0,8 kg m⁻², 2 d Trocknung bei Normklima und 7 d Wasserlagerung bei 23 °C Normklima: 23 °C, 50 % relative Luftfeuchtigkeit | | | | |

### Formulierungsbeispiele B.1 bis B.10

Die prozentualen Angaben beziehen sich jeweils auf Gew.-% PUPHD = lösemittelfreie Polyurethan-Polymer-Hybrid-Dispersion
PUD = lösemittelfreie Polyurethan-Basis-Dispersion

### Beispiel B.1

### Bindemittel für Elastikschichten

| | | |
|---|---|---|
| (1) | 98.2 % | PUPHD aus Beispiel A.4 |
| (2) | 0,5 % | Entlüftungsmittel (Gemisch schaumzerstörender Polysiloxane) |
| (3) | 1,0 % | Netzmittel (Silicontensid) |
| (4) | 0,3 % | Polyurethan-Verdicker |

Die flüssigen Komponenten (1) bis (3) werden vorgelegt und 5 min bei niedriger Schergeschwindigkeit homogenisiert. Nach Zugabe von (4) wird bis zum Erreichen der End-Viskosität dispergiert. Dabei darf die Temperatur der Formulierung 40 °C nicht übersteigen.

| | |
|---|---|
| Zugfestigkeit | 13,0 MPa |
| Bruchdehnung | 575 % |

### Beispiel B.2

### Haftvermittler

| | | |
|---|---|---|
| (1) | 97,00 % | PUPHD aus Beispiel A.4 |
| (2) | 3,00 % | Netz- und Dispergieradditiv (Blockpolymer mit pigmentaffinen Gruppen) |

| | |
|---|---|
| Zugfestigkeit | 12,5 MPa |
| Bruchdehnung | 550 % |

### Beispiel B.3

### Spritzbeschichtung / Verlaufsbeschichtung (Variante 1)

| | | |
|---|---|---|
| (1) | 69,80 % | PUPHD aus Beispiel A.2 |
| (2) | 0,40 % | Entlüftungsmittel (Gemisch schaumzerstörender Polysiloxane) |
| (3) | 0,80 % | Netz- und Dispergieradditiv (Blockpolymer mit pigmentaffinen Gruppen) |
| (4) | 0,20 % | Verlaufsadditiv (Modifizierte Organopolysiloxane) |
| (5) | 0,30 % | UV-Absorber (HALS-Typ) |
| (6) | 0,30 % | Additiv zur Verbesserung der Untergrundbenetzung (Silicontensid) |
| (7) | 13,10 % | Calciumcarbonat |
| (8) | 13,00 % | Glimmer |
| (9) | 2,00 % | Pigment (z.B. Eisenoxidrot) |
| (10) | 0,10 % | Polyurethan-Verdicker |

Die flüssigen Komponenten (1) bis (6) werden vorgelegt und 5 min bei niedriger Schergeschwindigkeit homogenisiert. Anschließend werden (7), (8) und (9) zugegeben und 10 min bei hoher Schergeschwindigkeit eindispergiert. Nach Zugabe von (10) wird bis zum Erreichen der End-Viskosität dispergiert. Dabei darf die Temperatur der Formulierung 40 °C nicht übersteigen.

| | |
|---|---|
| Zugfestigkeit | 4,3 MPa |
| Bruchdehnung | 730 % |
| Weiterreißfestigkeit | 14,2 N/mm |

### Beispiel B.4

### Spritzbeschichtung / Verlaufsbeschichtung (Variante 2)

Die Durchführung erfolgt in Analogie zu Beispiel B.3. Eingesetzt wird die PUPHD aus Beispiel A.3

| | |
|---|---|
| Zugfestigkeit | 5,2 MPa |
| Bruchdehnung | 660 % |
| Weiterreißfestigkeit | 16,1 N/mm |

### Beispiel B.5

### Spritzbeschichtung / Verlaufsbeschichtung (Variante 3)

Die Durchführung erfolgt in Analogie zu Beispiel B.3. Eingesetzt wird die PUPHD aus Beispiel A.4

| | |
|---|---|
| Zugfestigkeit | 5,6 MPa |
| Bruchdehnung | 580 % |
| Weiterreißfestigkeit | 20,5 N/mm |

### Beispiel B.6

### Spachtelmasse (Variante 1)

| | | |
|---|---|---|
| (1) | 48,58 % | PUPHD aus Beispiel A.2 |
| (2) | 0,40 % | Entlüftungsmittel (Gemisch schaumzerstörender Polysiloxane) |
| (3) | 0,80 % | Netz- und Dispergieradditiv (Blockpolymer mit pigmentaffinen Gruppen) |
| (4) | 0,20 % | Additiv zur Verbesserung der Untergrundbenetzung (Silicontensid) |
| (5) | 35,90 % | Calciumcarbonat |
| (6) | 2,00 % | Pigment (z.B. Eisenoxidrot) |
| (7) | 12,00 % | Kaolin |
| (8) | 0,12 % | Polyurethan-Verdicker |

Die flüssigen Komponenten (1) bis (4) werden vorgelegt und 5 min bei niedriger Schergeschwindigkeit homogenisiert. Anschließend werden (5), (6) und (7) zugegeben und 10 min bei hoher Schergeschwindigkeit eindispergiert. Nach Zugabe von (8) wird bis zum Erreichen der End-Viskosität dispergiert. Dabei darf die Temperatur der Formulierung 40 °C nicht übersteigen.

| | |
|---|---|
| Zugfestigkeit | 5,9 MPa |
| Bruchdehnung | 151 % |
| Weiterreißfestigkeit | 18,0 N/mm |

### Beispiel B.7

### Spachtelmasse (Variante 2)

Die Durchführung erfolgt in Analogie zu Beispiel B.6. Eingesetzt wird die PUPHD aus Beispiel A.3

| | |
|---|---|
| Zugfestigkeit | 6,2 MPa |
| Bruchdehnung | 129 % |
| Weiterreißfestigkeit | 16,6 N/mm |

### Beispiel B.8

### Spachtelmasse (Variante 3)

Die Durchführung erfolgt in Analogie zu Beispiel B.6. Eingesetzt wird die PUPHD aus Beispiel A.4

| | |
|---|---|
| Zugfestigkeit | 7,1 MPa |
| Bruchdehnung | 130 % |
| Weiterreißfestigkeit | 16,5 N/mm |

### Beispiel B.9

### Klebstoff

| | | |
|---|---|---|
| (1) | 60,00 % | PUPHD aus Beispiel A.4 |
| (2) | 0,50 % | Netz- und Dispergieradditiv (Blockpolymer mit pigmentaffinen Gruppen) |
| (3) | 0,50 % | Entlüftungsmittel (Gemisch schaumzerstörender Polysiloxane). |
| (4) | 38,90 % | Schwerspat |
| (5) | 0,10 % | Polyurethan-Verdicker |

Die flüssigen Komponenten (1) bis (3) werden vorgelegt und 5 min bei niedriger Schergeschwindigkeit homogenisiert. Anschließend wird (4) zugegeben und 10 min bei hoher Schergeschwindigkeit dispergiert. Nach Zugabe von (5) wird bis zum Erreichen der End-Viskosität dispergiert. Dabei darf die Temperatur der Formulierung 40 °C nicht übersteigen.

| | |
|---|---|
| Zugfestigkeit | 5,0 MPa |
| Bruchdehnung | 300 % |

### Beispiel B.10

### Strukturspritzbeschichtung auf Basis einer Polyurethan-Dispersion

| | | |
|---|---|---|
| (1) | 71,5 % | PUD aus Beispiel A.1 |
| (2) | 0,6 % | Netzmittel (Silicontensid) |
| (3) | 0,5 % | Dispergieradditiv (Copolymer mit pigmentaffinen Gruppen) |
| (4) | 0,3 % | Entlüftungsmittel (Gemisch schaumzerstörender Polysiloxane) |
| (5) | 24,0 % | Füllstoff (Calciumcarbonat) |
| (6) | 2,0 % | Pigment (Eisenoxide) |
| (7) | 1,0 % | pyrogene Kieselsäure |
| (8) | 0,1 % | Polyurethan-Verdicker |

Die flüssigen Komponenten (1) bis (4) werden vorgelegt und 5 min bei niedriger Schergeschwindigkeit homogenisiert. Anschließend werden (5), (6) und (7) zugegeben und 10 min bei hoher Schergeschwindigkeit dispergiert. Nach Zugabe von (8) wird bis zum Erreichen der End-Viskosität dispergiert.

Dabei darf die Temperatur der Formulierung 40 °C nicht übersteigen.

| | |
|---|---|
| Zugfestigkeit | 16,0 MPa |
| Bruchdehnung | 300 % |
| Weiterreißfestigkeit | 25,0 N/mm |

### Vergleichsbeispiele V.1 bis V.4

### Beispiel V.1

Typische Werte eines konventionellen 1K-Bindemittels (Conipur 322, Fa. Conica Technik AG):

| | |
|---|---|
| Zugfestigkeit | 15 MPa |
| Bruchdehnung | 400 % |
| Viskosität (20°C) | 4000 mPa·s |

### Beispiel V.2

Typische Werte einer konventionellen 1K- (Conipur 217, Fa. Conica Technik AG) oder 2K-Spritzbeschichtung (Conipur 216, Fa. Conica Technik AG,):

| | |
|---|---|
| Zugfestigkeit | 8 MPa |
| Bruchdehnung | 400 % |
| Viskosität (20°C) | 1000 mPa·s |

### Beispiel V.3

Typische Werte einer konventionellen 2K-Verlaufsbeschichtung (Conipur 210, Fa. Conica Technik AG):

| | |
|---|---|
| Zugfestigkeit | 2 MPa |
| Bruchdehnung | 150 % |
| Viskosität (20°C) | 3600 mPa·s |

### Beispiel V.4

Typische Werte eines konventionellen 2K-Spachtelmaterials (Conipur 203, Fa. Conica Technik AG):

| | |
|---|---|
| Zugfestigkeit | 3,5 MPa |
| Bruchdehnung | 80 % |
| Viskosität (20°C) | thixotrop |

### Anwendungsbeispiele C.1 bis C.8

- PUPHD =: lösemittelfreie Polyurethan-Polymer-Hybrid-Dispersion
- PUD =: lösemittelfreie Polyurethan-Basis-Dispersion

### Beispiel C.1

### Anwendung als Haftvermittler und Bindemittel für Elastikschichten

10 mm wasserdurchlässiger EPDM-Granulatbelag
Untergrund: Asphalt oder Beton
0,2 kg/m² Haftvermittler auf PUPHD-Basis gemäß Beispiel B . 2
9,5 kg/m² EPDM-Granulat, 1 bis 4 mm
3,2 kg/m² Bindemittel auf PUPHD-Basis gemäß Beispiel B.1

Nach Abtrocknung des durch Rollen oder Spritzen applizierten Haftvermittlers wird ein Gemisch aus EPDM-Granulat und Bindemittel zu einem Granulatbelag verdichtet.

### Beispiel C.2

### Anwendung als Spritzbeschichtung

13 mm wasserdurchlässige Strukturspritzbeschichtung auf Gummigranulatdecke
Untergrund: Asphalt oder Beton
0,2 kg/m² Haftvermittler (konventionell), z. B. Conipur 70
6,9 kg/m² SBR-Granulat, 1 bis 4 mm
1,5 kg/m² Polyurethan-Bindemittel (konventionell), z. B. Conipur 322
1,2 kg/m² Spritzbeschichtung auf PUPHD-Basis gemäß Beispiel B.3
0,8 kg/m² EPDM-Granulat, 0,5 bis 1,5 mm

Auf eine installierte und begehbare Gummigranulatdecke wird in zwei Arbeitsgängen ein Gemisch aus Spritzbeschichtung und EPDM-Granulat kleiner Körnung aufgespritzt.

### Beispiel C.3

### Anwendung als Spritzbeschichtung

13 mm wasserundurchlässige Strukturspritzbeschichtung auf Gummigranulatdecke
Untergrund: Asphalt oder Beton
0,2 kg/m² Haftvermittler (konventionell), z. B. Conipur 70
6,9 kg/m² SBR-Granulat, 1 bis 4 mm
1,5 kg/m² Polyurethan-Bindemittel (konventionell), z. B. Conipur 322
1,5 kg/m² Spachtelmaterial (konventionell), z. B. Conipur 203
1,2 kg/m² Spritzbeschichtung auf PUPHD-Basis gemäß Beispiel B.4
0,8 kg/m² EPDM-Granulat, 0,5 bis 1,5 mm

Um einen wasserundurchlässigen Sportbodenbelag zu erhalten, werden die Poren einer Gummigranulatdecke vor Applikation der Spritzbeschichtung mit einem Spachtelmaterial geschlossen.

### Beisipiel C.4

### Anwendung als Spachtelmaterial und Spritzbeschichtung

13 mm wasserundurchlässige Strukturspritzbeschichtung auf Gummigranulatdecke
Untergrund: Asphalt oder Beton
0,2 kg/m² Haftvermittler (konventionell), z. B. Conipur 70
6,9 kg/m² SBR-Granulat, 1 bis 4 mm
1,5 kg/m² Polyurethan-Bindemittel (konventionell), z. B. Conipur 322
1,5 kg/m² Spachtelmaterial auf PUPHD-Basis gemäß Beispiel B.6
1,2 kg/m² Spritzbeschichtung auf PUPHD-Basis gemäß Beispiel B.5
0,8 kg/m² EPDM-Granulat, 0,5 bis 1,5 mm

### Beispiel C.5

### Anwendung als Verlaufsbeschichtung

13 mm wasserundurchlässige Verlaufsbeschichtung auf Gummigranulatdecke
Untergrund: Asphalt oder Beton
0,2 kg/m² Haftvermittler (konventionell), z. B. Conipur 70
6,5 kg/m² SBR-Granulat, 1 bis 4 mm
1,4 kg/m² Polyurethan-Bindemittel. (konventionell), z. B. Conipur 322
1,5 kg/m² Spachtelmaterial (konventionell), z. B. Conipur 203
2,5 kg/m² Verlaufsbeschichtung auf PUPHD-Basis gemäß Beispiel B.3
2,5 kg/m² EPDM-Granulat 1 bis 4 mm

Zur Erreichung eines Porenschlußes wird auf eine installierte und begehbare Gummigranulatdecke ein Spachtelmaterial appliziert. Nach Aushärtung wird eine Verlaufsbeschichtung aufgebracht, die im noch flüssigen Zustand mit EPDM-Granulat im Überschuß abgestreut wird. Die nicht eingebundene Menge an EPDM-Granulat wird nach Durchhärtung der Beschichtung abgekehrt und kann erneut verwendet werden.

### Beispiel C.6

### Anwendung als Verlaufsbeschichtung

4 bis 5 mm wasserundurchlässiger, versiegelter Massivbelag
Untergrund: Asphalt
3 x 2,0 kg/m² Verlaufsbeschichtung auf PUPHD-Basis gemäß Beispiel B.4
0,3 kg/m² Polyurethan-Versiegelung (glatt oder rutschfest), z. B. Conipur 63 HE, Conipur 64 HE

Die Verlaufsbeschichtung wird in drei Arbeitsgängen appliziert und nach vollständiger Durchhärtung in zwei Spritzgängen versiegelt.

### Beispiel C.7

### Anwendung als Klebstoff, Spachtelmasse und Verlaufsbeschichtung

13 mm wasserundurchlässige Verlaufsbeschichtung auf vorgefertigter Gummigranulatdecke
Untergrund: Asphalt oder Beton
0,2 kg/m² Haftvermittler (konventionell), z. B. Conipur 70
1,0 kg/m² Klebstoff auf PUPHD-Basis gemäß Beispiel B.9 vorgefertigte Gummigranulatmatte, 10 mm
0,5 kg/m² Spachtelmaterial PUPHD-Basis gemäß Beispiel B.7
2,5 kg/m² Verlaufsbeschichtung auf PUPHD-Basis gemäß Beispiel B.5
2,5 kg/m² EPDM-Granulat, 1 bis 4 mm

Nach Vorbereitung des Untergrundes mit einem Haftvermittler wird auf diesen eine vorgefertigte Gummigranulatmatte geklebt, mit einem Spachtelmaterial ein Porenschluß vorgenommen und in vorgehend beschriebener Weise die Verlaufsbeschichtung appliziert, die mit EPDM-Granulat abgestreut wird.

### Beispiel C.8

### Anwendung als Haftvermittler, Bindemittel, Spachtelmaterial und Spritzbeschichtung

13 mm wasserundurchlässige Strukturspritzbeschichtung auf Gummigranulatdecke
Untergrund: Asphalt oder Beton
0,2 kg/m² Haftvermittler auf PUPHD-Basis gemäß Beispiel B. 2
6,9 kg/m² SBR-Granulat, 1 bis 4 mm
2,3 kg/m² Bindemittel auf PUPHD-Basis gemäß Beispiel B.1
1,5 kg/m² Spachtelmaterial auf PUPHD-Basis gemäß Beispiel B.8
1,2 kg/m² Spritzbeschichtung auf PUD-Basis gemäß Beispiel B.10
0,8 kg/m² EPDM-Granulat, 0,5 bis 1,5 mm

## Patentansprüche

1. LösemittelfreiePolyurethan-Polymer-Hybrid-Dispersionmiteinemhohen Festkörper-Gehalt an Polymer oder Formufierungs-Bestandteiten erhältlich durch
a) die Herstellung einer Polyurethan-Basis-Dispersion, wobei man
a₁) 2 bis 40 Gew.-% einer höhermolekularen Polyol-Komponente (A) (i) mit zwei oder mehreren gegenüber Polyisocyanaten reaktiven Hydroxyl-Gruppen und einer Molekularrnasse von 500 bis 6 000 Dalton, und ggf. 0,1 bis 2 Gew.-% einer niedermolekularen Polyol-Komponente (A) (ii) mit zwei oder mehreren gegenüber Polyisocyanaten reaktiven Hydroxyl-Gruppen und einer Molekularmasse von 60 bis 150 Dalton mit 2 bis 20 Gew.-% einer Polyisocyanat-Komponente (B), bestehend aus mindestens einem Polyisocyanat, Polyisocyanat-Derivat oder Polyisocyanat-Homologen mit zwei oder mehreren aliphatischen oder aromatischen Isocyanat-Gruppen ggf. in Gegenwart eines Katalysators reagieren läßt,
a₂) das ganz oder teilweise abreagierte Polyurethan-Preaddukt aus Stufe a₁) mit 0,1 bis 2 Gew.-% einer niedermolekularen und anionisch modifizierbaren Polyol-Komponente (A)(iii) mit einer Molekularmasse von 50 bis 250 Dalton und mit zwei oder mehreren gegenüber Polyisocyanaten reaktiven Hydroxyl-Gruppen und einer oder mehreren gegenüber Polyisocyanaten inerten Carboxyl-Gruppen, die in Gegenwart von Basen vollständig oder teilweise in Carboxylat-Gruppen überführt werden können, zur Reaktion bringt,
a₃) das Polyurethan-Prepolymer aus Stufe a₂) mit 0,1 bis 1,5 Gew.-% einer Neutralisations-Komponente (C) zur vollständigen oder teilweisen Neutralisation der Carboxyl-Gruppen umsetzt, anschließend oder gleichzeitig
a₄) das neutralisierte Polyurethan-Prepolymer aus Stufe a₃) in 10 bis 60 Gew.-% Wasser, das ggf. zur *in-situ* Formulierung 0,1 bis 70 Gew.-% einer Formulierungs-Komponente (F) bestehend aus Füllstoffen, Pigmenten, Weichmachern, Fasermaterialien und/oder sonstigen üblichen Additiven enthält, dispergiert, im Anschluß daran
a₅) die Polyurethan-Prepolymer-Dispersion aus Stufe a₄) mit 0,1 bis 2 Gew.-% einer Kettenverlängerungs-Komponente (D), bestehend aus mindestens einem Polyamin mit einer oder mehreren gegenüber Polyisocyanaten reaktiven Amino-Gruppe, und ggf. mit 0,05 bis 1 Gew.-% einer Kettenstopper-Komponente (E), bestehend aus mindestens einem Monoamin mit einer gegenüber Polyisocyanaten reaktiven Amino-Gruppe, zur Umsetzung bringt,
sowie
b) durch die anschließende Herstellung einer Polyurethan-Polymer-Hybrid-Dispersion, indem man
b₁) die Polyurethan-Basis-Dispersion aus Stufe a₅) mit einem vorgefertigten Gemisch aus 3 bis 60 Gew.-% einer Monomer-Komponente (G), bestehend aus einem oder mehreren Monomeren mit einer oder mehreren radikalisch polymerisierbaren Doppelbindungen, und 0,01 bis 1 Gew.-% einer Initiator-Komponente (H), bestehend aus mindestens einem lipophilen Radikal-Initiator, der bei einer Zerfallstemperatur im Bereich von 40 bis 120 °C eine Halbwertszeit von einer Stunde aufweist, versetzt und schließlich
b₂) durch den thermischen Zerfall der Komponente (H) eine radikalische Polymerisation der Komponente (G) innerhalb der Mizellen der Polyurethan-Basis-Dispersion durchführt,
wobei der Festkörper-Gehalt an Polyurethan-Polymer bestehend aus den Komponenten (A) bis (E) auf 40 bis 70 Gew.-% bezogen auf die Gesamtmenge der Poiyurethan-Basis-Dispersion eingestellt wird und der Feststoffgehalt an Polyurethan-Hybrid-Polymer- bestehend aus den Komponenten (A) bis (E), (G) und (H) auf 40 bis 70 Gew.% bezogen auf die Gesamtmenge der reinen Polyurethan-Polymer-Hybrid-Dispersion angestellt wird.

2. Polyurethan-Polymer-Hybrid-Dispersion nach Anspruch 1, **dadurch gekennzeichnet, daß** die Polyol-Komponente (A) (i) aus einem Polyether- und/oder Polyester-Polyol besteht.

3. Polyurethan-Polymer-Hybrid-Dispersion nach den Ansprüchen 1 oder 2, **dadurch gekennzeichnet, daß** es sich bei der Komponente (A) (i) um polymere Polyole wie Polyalkylenglykole, aliphatische oder aromatische Polyester, Polycaprolactone, Polycarbonate, Makromonomere, Telechele oder Epoxid-Harze handelt.

4. Polyurethan-Polymer-Hybrid-Dispersion nach mindestens einem der Ansprüche 1 bis 3, **dadurch gekennzeichnet, daß** als Komponente (A) (i) lineare bzw. difunktionelle Polypropylenglykole mit einer Molekularmasse von 1 000 bis 4 000 Dalton eingesetzt werden.

5. Polyurethan-Polymer-Hybrid-Dispersion nach mindestens einem der Ansprüche 1 bis 4, **dadurch gekennzeichnet, daß** als Komponente (A) (i) lineare bzw. difunktionelle aliphatische oder aromatische Polyester-Polyole mit einer Molekularmasse von 1 000 bis 4 000 Dalton verwendet werden.

6. Polyurethan-Polymer-Hybrid-Dispersion nach mindestens einem der Ansprüche 1 bis 5, **dadurch gekennzeichnet, daß** die Komponente (A) (iii) eine Molekularmasse von 100 bis 200 Dalton aufweist.

7. Polyurethan-Polymer-Hybrid-Dispersion nach mindestens einem der Ansprüche 1 bis 6, **dadurch gekennzeichnet, daß** es sich bei der Komponente (A) (iii) um eine Bishydroxyalkancarbonsäure handelt.

8. Polyurethan-Polymer-Hybrid-Dispersion nach Anspruch 7, **dadurch gekennzeichnet, daß** als Bishydroxyalkancarbonsäure Dimethylolpropionsäure eingesetzt wird.

9. Polyurethan-Polymer-Hybrid-Dispersion nach mindestens einem der Ansprüche 1 bis 9, **dadurch gekennzeichnet, daß** das NCO/OH-Equivalentverhältnis der Komponenten (A) (i), (A) (ii) und (B) in Stufe a1) auf einen Wert von 2,5 bis 5,0 eingestellt wird.

10. Polyurethan-Polymer-Hybrid-Dispersion nach mindestens einem der Ansprüche 1 bis 9, **dadurch gekennzeichnet, daß** das NCO/OH-Equivalent-Verhältnis des Polyurethan-Preadduktes aus Stufe a₁) und der Komponente (B) in Stufe a₂) auf einen Wert von 2,5 bis 5,0 eingestellt wird.

11. Polyurethan-Polymer-Hybrid-Dispersion nach mindestens einem der Ansprüche 1 bis 10, **dadurch gekennzeichnet, daß** das NCO/OH-Equivalent-Verhältnis der Gesamtmenge der Komponenten (A) und (B) in den Stufen a₁) und a₂) auf einen Wert von 1,5 bis 2,5, vorzugsweise 1,8 bis 2,2, eingestellt wird.

12. Polyurethan-Polymer-Hybrid-Dispersion nach mindestens einem der Ansprüche 1 bis 11, **dadurch gekennzeichnet, daß** die Reaktionsstufen a₁) und a₂) in Gegenwart von 0,01 bis 1 Gew.-% bezogen auf die Komponenten (A) und (B) eines für Polyadditions-Reaktionen an Polyisocyanaten üblichen Katalysators durchgeführt werden.

13. polyurethan-Polymer-Hybrid-Dispersion nach mindestens einem der Ansprüche 1 bis 12, **dadurch gekennzeichnet, daß** das Polyurethan-Prepolymer aus den Komponenten (A) und (B) in Stufe a₂) eine Säurezahl von 2,5 bis 25 meq KOH·g⁻¹ aufweist.

14. Polyurethan-Polymer-Hybrid-Dispersion nach mindestens einem der Ansprüche 1 bis 13, **dadurch gekennzeichnet, daß** die Reaktionsstufen a₁) und a₂) bei einer Temperatur von 60 bis 120 °C durchgeführt werden.

15. Polyurethan-Polymer-Hybrid-Dispersion nach Anspruch 14, **dadurch gekennzeichnet, daß** die Reaktionsstufen a₁) und a₂) bei einer Temperatur von 80 bis 100 °C durchgeführt werden.

16. Polyurethan-Polymer-Hybrid-Dispersion nach mindestens einem der Ansprüche 1 bis 15, **dadurch gekennzeichnet, daß** als Neutralisations-Komponente (C) tertiäre Amine, Ammoniak oder Alkalihydroxide verwendet werden.

17. Polyurethan-Polymer-Hybrid-Dispersion nach mindestens einem der Ansprüche 1 bis 16, **dadurch gekennzeichnet, daß** als Neutralisations-Komponente (C) Triethylamin eingesetzt wird.

18. Polyurethan-Polymer-Hybrid-Dispersion nach mindestens einem der Ansprüche 1 bis 17, **dadurch gekennzeichnet, daß** die Neutralisations-Komponente (C) in einer solchen Menge zugegeben wird, daß der Neutralisations-Grad bezogen auf die freien Carboxyl-Gruppen des Polyurethan-Prepolymers bei 70 bis 100 Equivalent-%, vorzugsweise bei 80 bis 90 Equivalent-%, liegt.

19. Polyurethan-Polymer-Hybrid-Dispersion nach mindestens einem der Ansprüche 1 bis 18, **dadurch gekennzeichnet, daß** die Reaktionsstufe a₃) bei einer Temperatur von 40 bis 60 °C durchgeführt wird.

20. Polyurethan-Polymer-Hybrid-Dispersion nach mindestens einem der Ansprüche 1 bis 19, **dadurch gekennzeichnet, daß** die Stufen a₃) und a₄) in der Weise zusammengefaßt wurden, daß die Neutralisations-Komponente (C) dem Wasser zugesetzt wurde, in dem das Prepolymer entsprechend der Reaktionsstufe a₄) dispergiert wird.

21. Polyurethan-Polymer-Hybrid-Dispersion nach mindestens einem der Ansprüche 1 bis 20, **dadurch gekennzeichnet, daß** die sonstigen üblichen Additive in der Komponente (F) aus Dispergierhilfsmitteln, Rheologiehilfsmitteln, Entschäumern, Haftvermittlern, Frostschutzmitteln, Flammschutzmitteln, Antioxidantien, UV-Stabilisatoren, Bakteriziden, Fungiziden, Konservierungsmitteln oder weiteren Polymeren bzw. Polymer-Dispersionen und/oder redispergierbaren Polymer-Pulvern bestehen.

22. Polyurethan-Polymer-Hybrid-Dispersion nach mindestens einem der Ansprüche 1 bis 21, **dadurch gekennzeichnet, daß** die Formulierungs-Komponente (F) vor der Dispergierung gemäß Reaktionsstufe a₄) ganz oder teilweise in das Polyurethan-Prepolymer eingebracht wird.

23. Polyurethan-Polymer-Hybrid-Dispersion nach mindestens einem der Ansprüche 1 bis 22, **dadurch gekennzeichnet, daß** die Formulierungs-Komponente (F) bei konventioneller Formulierung erst nach Abschluß der Reaktionsstufe b₂) in die fertig hergestellte Polyurethan-Polymer-Hybrid-Dispersion ganz oder teilweise eingebracht wird.

24. Polyurethan-Polymer-Hybrid-Dispersion nach mindestens einem der Ansprüche 1 bis 23, **dadurch gekennzeichnet, daß** die Reaktionsstufe a₄) bei 30 bis 50 °C durchgeführt wird.

25. Polyurethan-Polymer-Hybrid-Dispersion nach mindestens einem der Ansprüche 1 bis 24, **dadurch gekennzeichnet, daß** die Kettenverlängerungs-Komponente (D) in einer solchen Menge eingesetzt wird, daß der Kettenverlängerungs-Grad bezogen auf die freien Isocyanat-Gruppen des Polyurethan-Prepolymers bei 50 bis 100 Equivalent-%, vorzugsweise bei 70 bis 80 Equivalent-%, liegt.

26. Polyurethan-Polymer-Hybrid-Dispersion nach mindestens einem der Ansprüche 1 bis 25, **dadurch gekennzeichnet, daß** als Kettenverlängerungs-Komponente (D) ein difunktionelles primäres Amin verwendet wird.

27. Polyurethan-Polymer-Hybrid-Dispersion nach mindestens einem der Ansprüche 1 bis 26, **dadurch gekennzeichnet, daß** als difunktionelles primäres Amin Ethylendiamin eingesetzt wird.

28. Polyurethan-Polymer-Hybrid-Dispersion nach mindestens einem der Ansprüche 1 bis 27, **dadurch gekennzeichnet, daß** die Kettenstopper-Komponente (E) in einer solchen Menge eingesetzt wird, daß der Kettenstoppungs-Grad bezogen auf die freien Isocyanat-Gruppen des Polyurethan-Prepolymers bei 1 bis 20 Equivalent-%, vorzugsweise bei 5 bis 10 Equivalent-%, liegt.

29. Polyurethan-Polymer-Hybrid-Dispersion nach mindestens einem der Ansprüche 1 bis 28, **dadurch gekennzeichnet, daß** als Kettenstopper-Komponente (E) ein monofunktionelles primäres Amin verwendet wird.

30. Polyurethan-Polymer-Hybrid-Dispersion nach mindestens einem der Ansprüche 1 bis 29, **dadurch gekennzeichnet, daß** als monofunktionelles primäres Amin Isopropylamin eingesetzt wird.

31. Polyurethan-Polymer-Hybrid-Dispersion nach mindestens einem der Ansprüche 1 bis 30, **dadurch gekennzeichnet, daß** die Komponenten (D) und (E) in der Reaktionsstufe a₅) in vorab entnommenen Anteilen des Wassers im Gewichtsverhältnis 1 : 1 bis 1 : 10 verdünnt werden.

32. Polyurethan-Polymer-Hybrid-Dispersion nach mindestens einem der Ansprüche 1 bis 31, **dadurch gekennzeichnet, daß** im Anschluß an die Reaktionsstufe a₅) evtl. noch vorhandene freie NCO-Gruppen mit Wasser vollständig kettenverlängert werden.

33. Polyurethan-Polymer-Hybrid-Dispersion nach mindestens einem der Ansprüche 1 bis 32, **dadurch gekennzeichnet, daß** die Reaktionsstufe a₅) bei 30 bis 50 °C durchgeführt wird.

34. Polyurethan-Polymer-Hybrid-Dispersion nach mindestens einem der Ansprüche 1 bis 33, **dadurch gekennzeichnet, daß** der Festkörper-Gehalt an Polyurethan-Polymer bestehend aus den Komponenten (A) bis (E) auf 50 bis 60 Gew.-% bezogen auf die Gesamtmenge der Polyurethan-Basis-Dispersion eingestellt wird.

35. Polyurethan-Polymer-Hybrid-Dispersion nach mindestens einem der Ansprüche 1 bis 34, **dadurch gekennzeichnet, daß** der Festkörper-Gehalt an Polyurethan-Polymer bestehend aus den Komponenten (A) bis (E) auf 10 bis 50 Gew.-%, vorzugsweise auf 20 bis 40 Gew.-%, und der Festkörper-Gehalt an Formulierungs-Komponente (F) auf 10 bis 70 Gew.-%, vorzugsweise auf 20 bis 60 Gew.-%, bezogen auf die Gesamtmenge der in-situ oder konventionell formulierten Polyurethan-Basis-Dispersion eingestellt wird.

36. Polyurethan-Polymer-Hybrid-Dispersion nach mindestens einem der Ansprüche 1 bis 35, **dadurch gekennzeichnet, daß** der Gehalt an Carboxylat-Gruppen im Polyurethan-Polymer aus den Komponenten (A) bis (E) auf 10 bis 40 meq· (100 g)⁻¹, vorzugsweise auf 15 bis 35 meq· (100 g)⁻¹, eingestellt wird.

37. Polyurethan-Polymer-Hybrid-Dispersion nach mindestens einem der Ansprüche 1 bis 36, **dadurch gekennzeichnet, daß** das Polyurethan-Polymer aus den Komponenten (A) bis (E) eine Säurezahl von 5 bis 25 mg KOH·g⁻¹, vorzugsweise 7,5 bis 22,5 mg KOH·g⁻¹, aufweist.

38. Polyurethan-Polymer-Hybrid-Dispersion nach mindestens einem der Ansprüche 1 bis 37, **dadurch gekennzeichnet, daß** das Polyurethan-Polymer bestehend aus den Komponenten (A) bis (E) eine mittlere Molekularmasse von 25 000 bis 250 000 Dalton aufweist.

39. Polyurethan-Polymer-Hybrid-Dispersion nach mindestens einem der Ansprüche 1 bis 38, **dadurch gekennzeichnet, daß** die mittlere Partikelgröße der Mizellen des Polyurethan-Polymers bestehend aus den Komponenten (A) bis (E) 100 bis 500 nm, vorzugsweise 200 bis 400 nm, beträgt.

40. Polyurethan-Polymer-Hybrid-Dispersion nach mindestens einem der Ansprüche 1 bis 39, **dadurch gekennzeichnet, daß** es sich bei der Komponente (G) um Acrylsäure und deren Derivate und/oder Methacrylsäure und deren Derivate und/oder Styrol und dessen Derivate handelt.

41. Polyurethan-Polymer-Hybrid-Dispersion nach mindestens einem der Ansprüche 1 bis 40, **dadurch gekennzeichnet, daß** als Komponente (G) Kombinationen aus 5 bis 95 Gew.-% Methylmethacrylat und 5 bis 95 Gew.-% n-Butylacrylat bezogen auf die Gesamtmenge der Komponente (G) eingesetzt werden.

42. Polyurethan-Polymer-Hybrid-Dispersion nach mindestens einem der Ansprüche 1 bis 41, **dadurch gekennzeichnet, daß** als Komponente (G) Kombinationen aus 5 bis 25 Gew.-% an Hydroxyalkylestern der Acrylsäure und/oder Methacrylsäure und 75 bis 95 Gew.-% an weiteren Monomeren mit einer oder mehreren radikalisch polymerisierbaren Doppelbindungen eingesetzt werden.

43. Polyurethan-Polymer-Hybrid-Dispersion nach mindestens einem der Ansprüche 1 bis 42, **dadurch gekennzeichnet, daß** es sich bei der Komponente (H) um einen Radikal-Initiator mit einer oder mehreren Azo- oder Peroxogruppen handelt.

44. Polyurethan-Polymer-Hybrid-Dispersion nach mindestens einem der Ansprüche 1 bis 43, **dadurch gekennzeichnet, daß** als Komponente (H) ein Radikal-Initiator eingesetzt wird, der bei einer Zerfallstemperatur im Bereich von 40 bis 120 °C eine Halbwertszeit von 1 Stunde aufweist.

45. Polyurethan-Polymer-Hybrid-Dispersion nach mindestens einem der Ansprüche 1 bis 44, **dadurch gekennzeichnet, daß** als Komponente (H) 2,2'-Azobisisobutyronitril eingesetzt wird.

46. Polyurethan-Polymer-Hybrid-Dispersion nach mindestens einem der Ansprüche 1 bis 45, **dadurch gekennzeichnet, daß** das Initiator/Monomer-Molverhältnis der Komponenten (H) und (G) im Bereich von 0,001 bis 0,05 eingestellt wird.

47. Polyurethan-Polymer-Hybrid-Dispersion nach mindestens einem der Ansprüche 1 bis 46, **dadurch gekennzeichnet, daß** ein Teil des Wassers aus Stufe a₄) erst in Stufe b₁) zur Einstellung des Festkörper-Gehaltes zugegeben wird.

48. Polyurethan-Polymer-Hybrid-Dispersion nach mindestens einem der Ansprüche 1 bis 47, **dadurch gekennzeichnet, daß** die Reaktionsstufe b₁) bei einer Temperatur von 15 bis 35 °C, vorzugsweise bei 20 bis 30 °C, durchgeführt wird.

49. Polyurethan-Polymer-Hybrid-Dispersion nach mindestens einem der Ansprüche 1 bis 48, **dadurch gekennzeichnet, daß** die Reaktionsstufe b₂) bei einer Temperaturdifferenz von ± 10°C bezogen auf die Temperatur, bei der die Komponente (H) eine Halbwertszeit von 1 Stunde aufweist, durchgeführt wird.

50. Polyurethan-Polymer-Hybrid-Dispersion nach mindestens einem der Ansprüche 1 bis 49, **dadurch gekennzeichnet, daß** die Reaktionsstufe b₂) vorzugsweise bei einer Temperatur von 80 ± 10 °C bei Verwendung von 2,2'-Azobisisobutyronitril als Komponente (H) durchgeführt wird.

51. Polyurethan-Polymer-Hybrid-Dispersion nach mindestens einem der Ansprüche 1 bis 50, **dadurch gekennzeichnet, daß** die radikalische Polymerisation in der Reaktionsstufe b₂) ohne weitere Emulgatoren durchgeführt wird.

52. Polyurethan-Polymer-Hybrid-Dispersion nach mindestens einem der Ansprüche 1 bis 51, **dadurch gekennzeichnet, daß** das reine Polymer aus den Komponenten (G) und (H) in Stufe b₂) eine Glasübergangstemperatur von - 50 bis + 100 °C, vorzugsweise - 25 bis + 25 °C, aufweist.

53. Polyurethan-Polymer-Hybrid-Dispersion nach mindestens einem der Ansprüche 1 bis 52, **dadurch gekennzeichnet, daß** der Festkörper-Gehalt an Polyurethan-Hybrid-Polymer bestehend aus den Komponenten (A) bis (E) , (G) und (H) auf 50 bis 60 Gew.-%, bezogen auf die Gesamtmenge der reinen Polyurethan-Polymer-Hybrid-Dispersion eingestellt wird.

54. Polyurethan-Polymer-Hybrid-Dispersion nach mindestens einem der Ansprüche 1 bis 53, **dadurch gekennzeichnet, daß** das Verhältnis der anteiligen Festkörper-Gehalte aus Polyurethan-Harz aus den Komponenten (A) bis (E) und Polymer-Harz aus den Komponenten (G) und (H) auf 20 zu 80 bis 80 zu 20 Gew.-%, vorzugsweise auf 40 zu 60 bis 60 zu 40 Gew.-%, eingestellt wird.

55. Polyurethan-Polymer-Hybrid-Dispersion nach mindestens einem der Ansprüche 1 bis 54, **dadurch gekennzeichnet, daß** der Festkörper-Gehalt an Polyurethan-Polymer-Hybrid bestehend aus den Komponenten (A) bis (E), (G) und (H) auf 10 bis 50 Gew.-%, vorzugsweise auf 20 bis 40 Gew.-%, und der Festkörper-Gehalt an Füllstoffen auf 10 bis 70 Gew.-%, vorzugsweise auf 20 bis 60 Gew.-%, bezogen auf die Gesamtmenge der *in-situ* oder konventionell formulierten Polyurethan-Polymer-Hybrid-Dispersion-eingestellt wird.

56. Polyurethan-Polymer-Hybrid-Dispersion nach mindestens einem der Ansprüche 1 bis 55, **dadurch gekennzeichnet, daß** der Gehalt an Carboxylat-Gruppen im Polyurethan-Polymer-Hybrid aus den Komponenten (A) bis (E), (G) und (H) auf 5 bis 20 meq·(100 g)⁻¹, vorzugsweise auf 10 bis 15 meq·(100 g)⁻¹, eingestellt wird.

57. Polyurethan-Polymer-Hybrid-Dispersion nach mindestens einem der Ansprüche 1 bis 56, **dadurch gekennzeichnet, daß** das Polyurethan-Polymer-Hybrid aus den Komponenten (A) bis (E), (G) und (H) eine Säurezahl von 2,5 bis 12,5 mg KOH·g⁻¹, vorzugsweise 5 bis 10 mg KOH·g⁻¹, aufweist.

58. Polyurethan-Polymer-Hybrid-Dispersion nach mindestens einem der Ansprüche 1 bis 57, **dadurch gekennzeichnet, daß** die mittlere Partikelgröße der Mizellen des Polyurethan-Polymer-Hybrids 50 bis 500 nm, vorzugsweise 100 bis 400 nm, beträgt.

59. Polyurethan-Polymer-Hybrid-Dispersion nach mindestens einem der Ansprüche 1 bis 58, **dadurch gekennzeichnet, daß** das Polyurethan-Polymer-Hybrid aus den Komponenten (A) bis (E), (G) und (H) eine mittlere Molekularmasse von 100 000 bis 500 000 Dalton aufweist.

60. Polyurethan-Polymer-Hybrid-Dispersion nach mindestens einem der Ansprüche 1 bis 59, **dadurch gekennzeichnet, daß** die Polyurethan-Polymer-Hybrid-Dispersion aus den Komponenten (A) bis (E), (G) und (H) bei einer Auftragsmenge von 0, 8 bis 1, 6 kg m⁻² nach 2 d Trocknung bei 23 °C und 50 % relativer Luftfeuchtigkeit sowie 7 d Wasserlagerung bei 23 °C eine Wasseraufnahme von 1 bis 25 Gew-% an destilliertem Wasser aufweist.

61. Verwendung-einer Polyurethan-Polymer-Hybrid-Dispersion nach mindestens einem der Ansprüche 1 bis 60 in Formulierungen für Sportbodenbeläge in Form von
(a) Bindemitteln für Elastikschichten, bestehend aus Gummigranulaten oder Fasern sowie ggf. Zuschlagstoffen,
(b) Haftvermittlern oder Grundierungen für die Untergründe von Sportbodenbelägen,
(c) Spritzbeschichtungen, ggf. mit Struktur-Füllstoffen, zur Aufbringung auf elastische oder starre Untergründe,
(d) Verlaufsbeschichtungen zur Aufbringung auf elastische oder starre Untergründe,
(e) Spachtelmassen für den Porenverschluß von elastischen oder starren Untergründen von Sportbodenbelägen,
(f) Klebstoffen zur Verklebung von vorgefertigten Elastikschichten für Sportbodenbeläge,
(g) Versiegelungen von Sportbodenbelägen, ggf. mit Pigmenten.

62. Verwendung nach Anspruch 61, **dadurch gekennzeichnet, daß** die Formulierungen in einer Menge von 0,1 bis 10,0 kg pro m² der zu beschichtenden Fläche und pro Arbeitsgang eingesetzt werden.

63. Verwendung nach mindestens einem der Ansprüche 61 und 62, **dadurch gekennzeichnet, daß** die Formulierungen in Schichten mit einer Gesamtdicke von 0,1 bis 50 mm auf die elastischen oder starren Untergründe aufgebracht werden.

64. Verwendung nach mindestens einem der Ansprüche 61 bis 63, **dadurch gekennzeichnet, daß** die Formulierungen 0,1 bis 1,0 Gew.-% bezogen auf die Gesamtmasse der Formulierung, eines UV-Stabilisators auf Basis eines sterisch gehinderten Amins enthalten.

65. Verwendung nach mindestens einem der Ansprüche 61 bis 64, **dadurch gekennzeichnet, daß** die Formulierungen in ein- und zweikomponentiger Form zum Einsatz kommen.

66. Verwendung nach mindestens einem der Ansprüche 61 bis 65, **dadurch gekennzeichnet, daß** bei zweikomponentiger Applikation die Formulierungen auf Basis der lösemittelfreien Polyurethan-Polymer-Hybrid-Dispersion als Bindemittel-Komponente und wasseremulgierbare Polyisocyanate als Härter-Komponente eingesetzt werden.

67. Verwendung nach mindestens einem der Ansprüche 61 bis 66, **dadurch gekennzeichnet, daß** die Formulierungen auf Basis der lösemittelfreien Polyurethan-Polymer-Hybrid-Dispersionen mit Formulierungen auf Basis von lösemittelfreien Polyurethan-Dispersionen, Polymer-Dispersionen, redispergierbaren Polymer-Pulvern oder nichtwäßrigen Polymeren kombiniert werden.

68. Verwendung einer Polyurethan-Polymer-Hybrid-Dispersion nach mindestens einem der Ansprüche 1 bis 60 im Baubereich für einkomponentige, isocyanatfreie und lösemittelfreie BesChichtungen, Dichtstoffe, Klebstoffe, Lacke, oder Membranen für die Oberflächen von mineralischen Baustoffen, wie z.B. Beton, Gips, Zement, sowie Glas, Holz und Holzwerkstoffe, Papier, Metall und Kunststoff.

## Claims

1. Solvent-free polyurethane-polymer hybrid dispersion having a high solids content of polymer or formulation constituents, which is obtainable by
a) the preparation of a polyurethane base dispersion,
a₁) from 2 to 40% by weight of a relatively high molecular weight polyol component (A) (i) having two or more hydroxyl groups reactive toward polyisocyanates and a molar mass of from 500 to 6 000 Dalton and, if required, from 0.1 to 2% by weight of low molecular weight polyol component (A) (ii) having two or more hydroxyl groups reactive toward polyisocyanates and a molar mass of from 60 to 150 Dalton being reacted with from 2 to 20% by weight of a polyisocyanate component (B) consisting of at least one polyisocyanate, polyisocyanate derivative or polyisocyanate homologue having two or more aliphatic or aromatic isocyanate groups, if required in the presence of a catalyst,
a₂) the polyurethane preadduct from stage a₁), which has completely or partly reacted, being reacted with from 0.1 to 2% by weight of a low molecular weight and anionically modifiable polyol component (A) (iii) having two or more hydroxyl groups reactive toward polyisocyanates and one or more carboxyl groups inert toward polyisocyanates and a molar mass of from 50 to 250 Dalton, which can be completely or partly converted into carboxylate groups in the presence of bases,
a₃) the polyurethane prepolymer from stage a₂) being reacted with from 0.1 to 1.5% by weight of a neutralizing component (C) for complete or partial neutralization of the carboxyl groups, subsequently or simultaneously
a₄) the neutralized polyurethane prepolymer from stage a₃) being dispersed in from 10 to 60% by weight of water which, if required, also contains from 0.1 to 70% by weight of a formulation component (F) consisting of fillers, pigments, plasticizers, fibre materials and/or other conventional additives for in situ formulation, and then
a₅) the polyurethane prepolymer dispersion from stage a₄) being reacted with from 0.1 to 2% by weight of a chain-extending component (D) consisting of at least one polyamine having one or more amino groups reactive toward polyisocyanates and, if required, from 0.05 to 1% by weight of a chain stopper component (E) consisting of at least one monoamine having an amino group reactive toward polyisocyanates,
and
b) by the subsequent preparation of a polyurethane-polymer hybrid dispersion by
b₁) mixing the polyurethane base dispersion from stage a₅) with a prepared mixture of from 3 to 60% by weight of a monomer component (g) consisting of one or more monomers having one or more double bonds capable of free radical polymerization and from 0.01 to 1% by weight of initiator component (H) consisting of at least one lipophilic free radical initiator which has a half-life of one hour at a decomposition temperature in the range of from 40 to 120°C, and finally
b₂) carrying out a free radical polymerization of the component (G) within the micelles of the polyurethane base dispersion by the thermal decomposition of the component (H), the solids content of polyurethane polymer consisting of the components (A) to (E) being adjusted to from 40 to 70% by weight, based on the total amount of polyurethane base dispersion and the solids content of polyurethane polymer consisting of the components (A) to (E), (G) and (H) being adjusted to from 40 to 70% by wieght, based on the total amount of pure polyurethane polymer hybrid dispersion.

2. Polyurethane-polymer hybrid dispersion according to Claim 1, **characterized in that** the polyol component (A) (i) consists of a polyetherpolyol and/or polyesterpolyol.

3. Polyurethane-polymer hybrid dispersion according to either of Claims 1 and 2, **characterized in that** the component (A) (i) comprises polymeric polyols, such as polyalkylene glycols, aliphatic or aromatic polyesters, polycaprolactones, polycarbonates, macromonomers, telechelic substances or epoxy resins.

4. Polyurethane-polymer hybrid dispersion according to at least one of Claims 1 to 3, **characterized in that** linear or difunctional polypropylene glycols having a molar mass of from 1 000 to 4 000 Dalton are used as component (A) (i).

5. Polyurethane-polymer hybrid dispersion according to at least one of Claims 1 to 4, **characterized in that** linear or difunctional aliphatic or aromatic polyesterpolyols having a molar mass of from 1 000 to 4 000 Dalton are used as component (A) (i).

6. Polyurethane-polymer hybrid dispersion according to at least one of Claims 1 to 5, **characterized in that** the component (A) (iii) has a molar mass of from 100 to 200 Dalton.

7. Polyurethane-polymer hybrid dispersion according to at least one of Claims 1 to 6, **characterized in that** the component (A) (iii) is a bishydroxyalkanecarboxylic acid.

8. Polyurethane-polymer hybrid dispersion according to Claim 7, **characterized in that** the bishydroxyalkanecarboxylic acid used is dimethylolpropionic acid.

9. Polyurethane-polymer hybrid dispersion according to at least one of Claims 1 to 9, **characterized in that** the NCO/OH equivalent ratio of components (A) (i), (A) (ii) and (B) in stage a₁) is adjusted to a value of from 2.5 to 5.0.

10. Polyurethane-polymer hybrid dispersion according to at least one of Claims 1 to 9, **characterized in that** the NCO/OH equivalent ratio of the polyurethane preadduct from stage a₁) and of component (B) in stage a₂) is adjusted to a value of from 2.5 to 5.0.

11. Polyurethane-polymer hybrid dispersion according to at least one of Claims 1 to 10, **characterized in that** the NCO/OH equivalent ratio of the total amount of the components (A) and (B) in the stages a₁) and a₂) is adjusted to a value of from 1.5 to 2.5, preferably from 1.8 to 2.2.

12. Polyurethane-polymer hybrid dispersion according to at least one of Claims 1 to 11, **characterized in that** the reaction stages a₁) and a₂) are carried out in the presence of from 0.01 to 1% by weight, based on the components (A) and (B), of a catalyst customary for polyaddition reactions with polyisocyanates.

13. Polyurethane-polymer hybrid dispersion according to at least one of Claims 1 to 12, **characterized in that** the polyurethane prepolymer comprises the components (A) and (B) from stage a₂) has an acid number of from 2.5 to 25 meq KOH·g⁻¹.

14. Polyurethane-polymer hybrid dispersion according to at least one of Claims 1 to 13, **characterized in that** the reaction stages a₁) and a₂) are carried out at a temperature of from 60 to 120°C.

15. Polyurethane-polymer hybrid dispersion according to Claim 14, **characterized in that** the reaction stages a₁) and a₂) are carried out at a temperature of from 80 to 100°C.

16. Polyurethane-polymer hybrid dispersion according to at least one of Claims 1 to 15, **characterized in that** tertiary amines, ammonia or alkali metal hydroxides are used as neutralizing component (C).

17. Polyurethane-polymer hybrid dispersion according to at least one of Claims 1 to 16, **characterized in that** triethylamine is used as neutralizing component (C).

18. Polyurethane-polymer hybrid dispersion according to at least one of Claims 1 to 17, **characterized in that** the neutralizing component (C) is added in an amount such that the degree of neutralization is from 70 to 100 equivalent %, preferably from 80 to 90 equivalent %, based on the free carboxyl groups of the polyurethane prepolymer.

19. Polyurethane-polymer hybrid dispersion according to at least one of Claims 1 to 18, **characterized in that** the reaction stage a₃) is carried out at a temperature of from 40 to 60°C.

20. Polyurethane-polymer hybrid dispersion according to at least one of Claims 1 to 19, **characterized in that** the stages a₃) and a₄) were combined in a manner such that the neutralizing component (C) was added to the water in which the prepolymer is dispersed according to reaction stage a₄).

21. Polyurethane-polymer hybrid dispersion according to at least one of Claims 1 to 20, **characterized in that** the other customary additives in the component (F) consist of dispersants, rheology auxiliaries, antifoams, adhesion promoters, antifreezes, flameproofing agents, antioxidants, UV stabilizers, bactericides, fungicides, preservatives or further polymers or polymer dispersions and/or redispersible polymer powders.

22. Polyurethane-polymer hybrid dispersion according to at least one of Claims 1 to 21, **characterized in that** the formulation component (F) is completely or partly introduced into the polyurethane prepolymer before the dispersing according to reaction stage a₄).

23. Polyurethane-polymer hybrid dispersion according to at least one of Claims 1 to 22, **characterized in that**, in the case of conventional formulation, the formulation component (F) is completely or partly introduced into the prepared polyurethane-polymer hybrid dispersion only after the end of the reaction stage b₂).

24. Polyurethane-polymer hybrid dispersion according to at least one of Claims 1 to 23, **characterized in that** the reaction stage a₄) is carried out at from 30 to 50°C.

25. Polyurethane-polymer hybrid dispersion according to at least one of Claims 1 to 24, **characterized in that** the chain-extending component (D) is used in an amount such that the degree of chain extension is from 50 to 100 equivalent %, preferably from 70 to 80 equivalent %, based on the free isocyanate groups of the polyurethane prepolymer.

26. Polyurethane-polymer hybrid dispersion according to at least one of Claims 1 to 25, **characterized in that** the chain-extending component (D) used is a difunctional primary amine.

27. Polyurethane-polymer hybrid dispersion according to at least one of Claims 1 to 26, **characterized in that** the difunctional primary amine used is ethylenediamine.

28. Polyurethane-polymer hybrid dispersion according to at least one of Claims 1 to 27, **characterized in that** the chain stopper component (E) is used in an amount such that the degree of chain stopping is from 1 to 20 equivalent %, preferably from 5 to 10 equivalent %, based on the free isocyanate groups of the polyurethane prepolymer.

29. Polyurethane-polymer hybrid dispersion according to at least one of Claims 1 to 28, **characterized in that** the chain stopper component (E) used is a monofunctional primary amine.

30. Polyurethane-polymer hybrid dispersion according to at least one of Claims 1 to 29, **characterized in that** the monofunctional primary amine used is isopropylamine.

31. Polyurethane-polymer hybrid dispersion according to at least one of Claims 1 to 30, **characterized in that** the components (D) and (E) in the reaction stage a₅) are diluted in the weight ratio of from 1 1 to 1 : 10 in amounts of water removed beforehand.

32. Polyurethane-polymer hybrid dispersion according to at least one of Claims 1 to 31, **characterized in that** any free NCO groups still present after the reaction stage a₅) are all subjected to chain-extension with water.

33. Polyurethane-polymer hybrid dispersion according to at least one of Claims 1 to 32, **characterized in that** the reaction stage a₅) is carried out at from 30 to 50°C.

34. Polyurethane-polymer hybrid dispersion according to at least one of Claims 1 to 33, **characterized in that** the solids content of polyurethane polymer consisting of the components (A) to (E) is adjusted to from 50 to 60% by weight, based on the total amount of the polyurethane base dispersion.

35. Polyurethane-polymer hybrid dispersion according to at least one of Claims 1 to 34, **characterized in that** the solids content of polyurethane polymer consisting of the component (A) to (E) is adjusted to from 10 to 50% by weight, preferably from 20 to 40% by weight, and the solids content of the formulation component (F) is adjusted to from 10 to 70% by weight, preferably from 20 to 60% by weight, based on the total amount of the polyurethane base dispersion formulated in situ or conventionally.

36. Polyurethane-polymer hybrid dispersion according to at least one of Claims 1 to 35, **characterized in that** the content of carboxylate groups in the polyurethane polymer comprising the components (A) to (E) is adjusted to from 10 to 40 meq·(100 g)⁻¹, preferably from 15 to 35 meq·(100 g)⁻¹.

37. Polyurethane-polymer hybrid dispersion according to at least one of Claims 1 to 36, **characterized in that** the polyurethane polymer comprising the components (A) to (E) has an acid number of from 5 to 25 mg KOH·g⁻¹, preferably from 7.5 to 22.5 mg KOH·g⁻¹.

38. Polyurethane-polymer hybrid dispersion according to at least one of Claims 1 to 37, **characterized in that** the polyurethane polymer consisting of the components (A) to (E) has an average molar mass of from 25 000 to 250 000 Dalton.

39. Polyurethane-polymer hybrid dispersion according to at least one of Claims 1 to 38, **characterized in that** the mean particle size of the micelles of the polyurethane polymer consisting of the components (A) to (E) is from 100 to 500 nm, preferably from 200 to 400 nm.

40. Polyurethane-polymer hybrid dispersion according to at least one of Claims 1 to 39, **characterized in that** the component (G) comprises acrylic acid and its derivatives and/or methacrylic acid and its derivatives and/or styrene and its derivatives.

41. Polyurethane-polymer hybrid dispersion according to at least one of Claims 1 to 40, **characterized in that** combinations of from 5 to 95% by weight of methyl methacrylate and from 5 to 95% by weight of n-butyl acrylate, based on the total amount of the component (G), are used as component (G).

42. Polyurethane-polymer hybrid dispersion according to at least one of Claims 1 to 41, **characterized in that** combinations of from 5 to 25% by weight of hydroxyalkyl esters of acrylic acid and/or methacrylic acid and from 75 to 95% by weight of further monomers having one or more double bonds capable of free radical polymerization are used as component (G).

43. Polyurethane-polymer hybrid dispersion according to at least one of Claims 1 to 42, **characterized in that** the component (H) is a free radical initiator having one or more azo or peroxo groups.

44. Polyurethane-polymer hybrid dispersion according to at least one of Claims 1 to 43, **characterized in that** a free radical initiator which has a half-life of one hour at a decomposition temperature in the range of from 40 to 120°C is used as component (H).

45. Polyurethane-polymer hybrid dispersion according to at least one of Claims 1 to 44, **characterized in that** 2,2'-azobisisobutyronitrile is used as component (H).

46. Polyurethane-polymer hybrid dispersion according to at least one of Claims 1 to 45, **characterized in that** the molar initiator/monomer ratio of the components (H) and (G) is adjusted in the range from 0.001 to 0.05.

47. Polyurethane-polymer hybrid dispersion according to at least one of Claims 1 to 46, **characterized in that** a part of the water from stage a₄) is added only in stage b₁) for adjusting the solids content.

48. Polyurethane-polymer hybrid dispersion according to at least one of Claims 1 to 47, **characterized in that** the reaction stage b₁) is carried out at a temperature of from 15 to 35°C, preferably from 20 to 30°C.

49. Polyurethane-polymer hybrid dispersion according to at least one of Claims 1 to 48, **characterized in that** the reaction stage b₂) is carried out at a temperature difference of ± 10°C, based on the temperature at which the component (H) has a half-life of one hour.

50. Polyurethane-polymer hybrid dispersion according to at least one of Claims 1 to 49, **characterized in that** the reaction stage b₂) is carried out preferably at a temperature of 80 ± 10°C when using 2,2'-azobisisobutyronitrile as component (H).

51. Polyurethane-polymer hybrid dispersion according to at least one of Claims 1 to 50, **characterized in that** the free radical polymerization in the reaction stage b₂) is carried out without further emulsifiers.

52. Polyurethane-polymer hybrid dispersion according to at least one of Claims 1 to 51, **characterized in that** the pure polymer comprising the components (G) and (H) in stage b₂) has a glass transition temperature of from -50 to +100°C, preferably from -25 to +25°C.

53. Polyurethane-polymer hybrid dispersion according to at least one of Claims 1 to 52, **characterized in that** the solids content of polyurethane hybrid polymer consisting of the components (A) to (E), (G) and (H) is adjusted to from 50 to 60% by weight, based on the total amount of pure polyurethane-polymer hybrid dispersion.

54. Polyurethane-polymer hybrid dispersion according to at least one of Claims 1 to 53, **characterized in that** the ratio of the proportionate solids contents of polyurethane resin comprising the components (A) to (E) and polymer resin comprising the components (G) and (H) is adjusted to from 20 : 80 to 80 : 20% by weight, preferably from 40 : 60 to 60 : 40% by weight.

55. Polyurethane-polymer hybrid dispersion according to at least one of Claims 1 to 54, **characterized in that** the solids content of polyurethane-polymer hybrid consisting of the components (A) to (E), (G) and (H) is adjusted to from 10 to 50% by weight, preferably from 20 to 40% by weight, and the solids content of fillers is adjusted to from 10 to 70% by weight, preferably from 20 to 60% by weight, based on the total amount of the polyurethane-polymer hybrid dispersion formulated in situ or conventionally.

56. Polyurethane-polymer hybrid dispersion according to at least one of Claims 1 to 55, **characterized in that** the content of carboxylate groups in the polyurethane-polymer hybrid comprising the components (A) to (E), (G) and (H) is adjusted to from 5 to 20 meq·(100 g)⁻¹, preferably from 10 to 25 meq·(100 g)⁻¹.

57. Polyurethane-polymer hybrid dispersion according to at least one of Claims 1 to 56, **characterized in that** the polyurethane-polymer hybrid comprising the components (A) to (E), (G) and (H) has an acid number of from 2.5 to 12.5 mg KOH·g⁻¹, preferably from 5 to 10 mg KOH·g⁻¹.

58. Polyurethane-polymer hybrid dispersion according to at least one of Claims 1 to 57, **characterized in that** the mean particle size of the micelles of polyurethane-polymer hybrid is from 50 to 500 nm, preferably from 100 to 400 nm.

59. Polyurethane-polymer hybrid dispersion according to at least one of Claims 1 to 58, **characterized in that** the polyurethane-polymer hybrid comprising the components (A) to (E), (G) and (H) has an average molar mass of from 100 000 to 500 000 Dalton.

60. Polyurethane-polymer hybrid dispersion according to at least one of Claims 1 to 59, **characterized in that**, when applied in an amount of from 0.8 to 1.6 kg m⁻², the polyurethane-polymer hybrid dispersion comprising the components (A) to (E), (G) and (H) has a water absorption of from 1 to 25% by weight of distilled water after drying for 2 days at 23°C and 50% relative humidity and storage in water at 23°C for 7 days.

61. Use of a polyurethane-polymer hybrid dispersion according to at least one of Claims 1 to 60 in formulations for sport floor coverings in the form of
(a) binders for resilient coats, consisting of rubber granules or fibres and, if required, additives,
(b) adhesion promoters or primers for the substrates of sport floor coverings,
(c) spray coatings, if required comprising structural fillers, for application to resilient or rigid substrates,
(d) levelling coatings for application to resilient or rigid substrates,
(e) filling compounds for sealing the pores of resilient or rigid substrates of sport floor coverings,
(f) adhesives for the adhesive bonding of prefabricated resilient coats for sport floor coverings,
(g) seals on sport floor coverings, if required comprising pigments.

62. Use according to Claim 61, **characterized in that** the formulations are used in an amount of from 0.1 to 10.0 kg per m² of the surface to be coated and per operation.

63. Use according to at least one of Claims 61 and 62, **characterized in that** the formulations are applied in coats having a total thickness of from 0.1 to 50 mm to the resilient or rigid substrates.

64. Use according to at least one of Claims 61 to 63, **characterized in that** the formulations contain from 0.1 to 1.0% by weight, based on the total mass of the formulation, of a UV stabilizer based on a sterically hindered amine.

65. Use according to at least one of Claims 61 to 64, **characterized in that** the formulations are used in one-component and two-component form.

66. Use according to at least one of Claims 61 to 65, **characterized in that**, in the case of application in two-component form, the formulations based on the solvent-free polyurethane-polymer hybrid dispersion are used as binder component and water-emulsifiable polyisocyanates as curing component.

67. Use according to at least one of Claims 61 to 66, **characterized in that** the formulations based on the solvent-free polyurethane-polymer hybrid dispersions are combined with formulations based on solvent-free polyurethane dispersions, polymer dispersions, redispersible polymer powders or nonaqueous polymers.

68. Use of a polyurethane-polymer hybrid dispersion according to at least one of Claims 1 to 60 in the building sector for one-component, isocyanate-free and solvent-free coatings, sealants, adhesives, finishes or membranes for the surfaces of mineral building materials, such as, for example, concrete, gypsum, cement and glass, wood and wood-based materials, paper, metal and plastic.

## Revendications

1. Dispersion hybride polymère/polyuréthane sans solvant à forte teneur en matières solides polymères ou en composants de formulation pouvant être obtenus
a) en préparant une dispersion à base de polyuréthane en
a₁) faisant réagir 2 à 40 % en poids d'un composant polyol à haut poids moléculaire (A) (i) avec deux ou plusieurs groupes hydroxyle réactifs vis-à-vis des polyisocyanates et d'une masse moléculaire de 500 à 6.000 Dalton et, le cas échéant, 0,1 à 2 % en poids d'un composant polyol à bas poids moléculaire (A) (ii) avec deux ou plusieurs groupes hydroxyle réactifs vis-à-vis des polyisocyanates et d'une masse moléculaire de 60 à 150 Dalton avec 2 à 20 % en poids d'un composant polyisocyanate (B), constitué d'au moins un polyisocyanate, d'un dérivé de polyisocyanate ou d'un homologue de polyisocyanate comportant deux ou plusieurs groupes isocyanate aliphatiques ou aromatiques, le cas échéant en présence d'un catalyseur,
a₂) en faisant réagir le préadduit de polyuréthane, qui a complètement ou partiellement réagi, de l'étape a₁) avec 0,1 à 2 % en poids d'un composant polyol à bas poids moléculaire et modifiable par voie anionique, (A) (iii) d'une masse moléculaire de 50 à 250 Dalton et avec deux ou plusieurs groupes hydroxyle réactifs vis-à-vis des polyisocyanates et un ou plusieurs groupes carboxyle inertes par rapport aux polyisocyanates, pouvant être transformés complètement ou partiellement en groupes carboxylate en présence de bases,
a₃) en convertissant le prépolymère de polyuréthane de l'étape a₂) avec 0,1 à 1,5 % en poids d'un composant de neutralisation (C) pour la neutralisation complète ou partielle des groupes carboxyle, ensuite ou en même temps,
a₄) en dispersant le prépolymère de polyuréthane neutralisé de l'étape a₃) dans 10 à 60 % en poids d'eau qui contient, le cas échant, pour la formulation *in situ,* 0,1 à 70 % en poids d'un composant de formulation (F) constitué de charges, de pigments, de plastifiants, de matières fibreuses et/ou d'autres additifs usuels, puis
a₅) en convertissant la dispersion de prépolymère de polyuréthane de l'étape a₄) avec 0,1 à 2 % en poids d'un composant extendeur de chaîne (D), constitué d'au moins une polyamine avec un ou plusieurs groupes amino réactifs vis-à-vis des polyisocyanates et, le cas échéant, avec 0,05 à 1 % en poids d'un composant coupeur de chaîne (E), constitué d'au moins une monoamine avec un groupe amino réactifs vis-à-vis des polyisocyanates,
ainsi qu'
b) en préparant ensuite une dispersion hybride de polymère et de polyuréthane en
b₁) mélangeant à la dispersion de base de polyuréthane de l'étape a₅) un mélange préalablement préparé de 3 à 60 % en poids d'un composant monomère (G) constitué d'un ou plusieurs monomères ayant une ou plusieurs doubles liaisons polymérisables par voie radicalaire et 0,01 à 1 % en poids d'un composant amorceur (H), constitué d'au moins un amorceur radicalaire lipophile qui, à une température de dégradation dans la plage de 40 à 120°C, a une demi-vie d'une heure et, enfin,
b₂) grâce à la dégradation thermique du composant (H), on réalise une polymérisation radicalaire du composant (G) à l'intérieur des micelles de la dispersion de base de polyuréthane,
la teneur en substances solides de polymère de polyuréthane, constitué des composants (A) à (E), étant ajustée à 40 à 70 % en poids par rapport à la quantité totale de dispersion de base de polyuréthane, et la teneur en matières solides de polymère hybride de polyuréthane, constitué des composants (A) à (E), (G) et (H), étant ajustée à 40 jusqu'à 70 % en poids, rapporté à la quantité totale de la dispersion hybride polymère/polyuréthane.

2. Dispersion hybride polymère/polyuréthane selon la revendication 1, **caractérisée en ce que** le composant polyol (A) (i) est constitué d'un polyéther polyol et/ou d'un polyester polyol.

3. Dispersion hybride polymère/polyuréthane selon les revendications 1 ou 2, **caractérisée en ce que** le composant (A) (i) est constitué de polyols polymères comme les polyalkylène glycols, les polyesters aliphatiques ou aromatiques, les polycaprolactones, les polycarbonates, les macromonomères, les téléchèles ou les résines époxydes.

4. Dispersion hybride polymère/polyuréthane selon au moins l'une quelconque des revendications 1 à 3, **caractérisée en ce qu'**on met en oeuvre, comme composant (A) (i), des polypropylèneglycols linaires ou difonctionnels ayant une masse moléculaire de 1.000 à 4.000 Dalton.

5. Dispersion hybride polymère/polyuréthane selon au moins l'une quelconque des revendications 1 à 4, **caractérisée en ce qu'**on utilise, comme composant (A) (i) des polyester-polyols aliphatiques ou aromatiques linéaires ou difonctionnels ayant une masse moléculaire de 1.000 à 4.000 Dalton.

6. Dispersion hybride polymère/polyuréthane selon au moins l'une quelconque des revendications 1 à 5, **caractérisée en ce que** le composant (A) (iii) a une masse moléculaire de 100 à 200 Dalton.

7. Dispersion hybride polymère/polyuréthane selon au moins l'une quelconque des revendications 1 à 6, **caractérisée en ce que** le composant (A) (iii) est un acide bishydroxyalcane carboxylique.

8. Dispersion hybride polymère/polyuréthane selon la revendication 7, **caractérisée en ce qu'**on met en oeuvre de l'acide diméthylol-proprionique en tant qu'acide bishydroxyalcane-carboxylique.

9. Dispersion hybride polymère/polyuréthane selon au moins l'une quelconque des revendications 1 à 8, **caractérisée en ce qu'**on ajuste le rapport NCO/équivalent OH des composants A(i), (A)(ii) et (B) à l'étape a₁) à une valeur de 2,5 à 5,0.

10. Dispersion hybride polymère/polyuréthane selon au moins l'une quelconque des revendications 1 à 9, **caractérisée en ce qu'**on ajuste le rapport NCO/équivalent OH du préadduit de polyuréthane de l'étape a₁) et du composant (B) à l'étape a₂) à une valeur de 2,5 à 5,0.

11. Dispersion hybride polymère/polyuréthane selon au moins l'une quelconque des revendications 1 à 10, **caractérisée en ce qu'**on ajuste le rapport NCO/équivalent OH de la quantité totale de composants (A) et (B) aux étapes a₁) et a₂) à une valeur de 1,5 à 2,5, de préférence de 1,8 à 2,2.

12. Dispersion hybride polymère/polyuréthane selon au moins l'une quelconque des revendications 1 à 11, **caractérisée en ce que** les étapes réactionnelles a₁) et a₂) sont réalisées en présence de 0,01 à 1 % en poids par rapport aux composants (A) et (B) d'un catalyseur usuel pour les réactions de polyaddition sur des polyisocyanates.

13. Dispersion hybride polymère/polyuréthane selon au moins l'une quelconque des revendications 1 à 12, **caractérisée en ce que** le prépolymère de polyuréthane des composants (A) et (B) à l'étape a₂) a un indice d'acide de 2,5 à 25 meq KOH·g⁻¹.

14. Dispersion hybride polymère/polyuréthane selon au moins l'une quelconque des revendications 1 à 13, **caractérisée en ce qu'**on réalise les étapes réactionnelles a₁) et a₂) à une température de 60 à 120°C.

15. Dispersion hybride polymère/polyuréthane selon la revendication 14, **caractérisée en ce qu'**on réalise les étapes réactionnelles a₁) et a₂) à une température de 80 à 100°C.

16. Dispersion hybride polymère/polyuréthane selon au moins l'une quelconque des revendications 1 à 15, **caractérisée en ce qu'**on utilise des amines tertiaires, de l'ammoniac ou des hydroxydes alcalins, en tant que composant de neutralisation (C).

17. Dispersion hybride polymère/polyuréthane selon au moins l'une quelconque des revendications 1 à 16, **caractérisée en ce qu'**on met oeuvre de la triéthylamine en tant que composant de neutralisation (C).

18. Dispersion hybride polymère/polyuréthane selon au moins l'une quelconque des revendications 1 à 17, **caractérisée en ce qu'**on ajoute le composant de neutralisation (C) dans une quantité telle que le taux de neutralisation, par rapport aux groupes carboxyle libres du prépolymère de polyuréthane, est de l'ordre de 70 à 100 % équivalent, de préférence de 80 à 90 % équivalent.

19. Dispersion hybride polymère/polyuréthane selon au moins l'une quelconque des revendications 1 à 18, **caractérisée en ce que** l'étape réactionnelle a₃) est réalisée à une température de 40 à 60°C.

20. Dispersion hybride polymère/polyuréthane selon au moins l'une quelconque des revendications 1 à 19, **caractérisée en ce qu'**on a regroupé les étapes a₃) et a₄) de manière à ajouter le composant de neutralisation (C) à l'eau dans laquelle le prépolymère est dispersé conformément à l'étape réactionnelle a₄).

21. Dispersion hybride polymère/polyuréthane selon au moins l'une quelconque des revendications 1 à 20, **caractérisée en ce que** les autres additifs usuels du composant (F) sont constitués d'auxiliaires de dispersion, d'auxiliaires de rhéologie, d'agents anti-mousse, d'agents d'adhérence, d'agents antigel, d'agents ignifuges, d'antioxydants, de stabilisants d'UV, de bactéricides, de fongicides, d'agents de conservation ou d'autres polymères ou dispersions de polymères et/ou de poudres polymères redispersables.

22. Dispersion hybride polymère/polyuréthane selon au moins l'une quelconque des revendications 1 à 21, **caractérisée en ce qu'**on introduit tout ou partie du composant de formulation (F) au prépolymère de polyuréthane avant la dispersion selon l'étape réactionnelle a₄).

23. Dispersion hybride polymère/polyuréthane selon au moins l'une quelconque des revendications 1 à 22, **caractérisée en ce qu'**on introduit tout ou partie du composant de formulation (F), en cas de formulation conventionnelle à l'issue de l'étape réactionnelle b₂) à la dispersion hybride polymère/polyuréthane terminée seulement.

24. Dispersion hybride polymère/polyuréthane selon au moins l'une quelconque des revendications 1 à 23, **caractérisée en ce qu'**on réalise l'étape réactionnelle a₄) à une température de 30 à 50°C.

25. Dispersion hybride polymère/polyuréthane selon au moins l'une quelconque des revendications 1 à 24, **caractérisée en ce qu'**on met en oeuvre le composant extendeur de chaîne (D) dans une quantité telle que le taux d'extension de chaîne, par rapport aux groupes isocyanate libres du prépolymère de polyuréthane est de l'ordre de 50 à 100 % équivalent, de préférence de 70 à 80 % équivalent.

26. Dispersion hybride polymère/polyuréthane selon au moins l'une quelconque des revendications 1 à 25, **caractérisée en ce qu'**on utilise une amine difonctionnelle primaire en tant que composant extendeur de chaîne (D).

27. Dispersion hybride polymère/polyuréthane selon au moins l'une quelconque des revendications 1 à 26, **caractérisée en ce qu'**on utilise de l'éthylènediamine en tant qu'amine primaire difonctionnelle.

28. Dispersion hybride polymère/polyuréthane selon au moins l'une quelconque des revendications 1 à 27, **caractérisée en ce qu'**on utilise le composant coupeur de chaîne (E) dans une quantité telle que le taux de coupure de chaîne, par rapport aux groupes isocyanate libres du prépolymère de polyuréthane, est de l'ordre de 1 à 20 % équivalent, de préférence de 5 à 10 % équivalent.

29. Dispersion hybride polymère/polyuréthane selon au moins l'une quelconque des revendications 1 à 28, **caractérisée en ce qu'**on utilise une amine primaire monofonctionnelle en tant que composant coupeur de chaîne (E).

30. Dispersion hybride polymère/polyuréthane selon au moins l'une quelconque des revendications 1 à 29, **caractérisée en ce qu'**on met de l'isopropylamine en oeuvre en tant qu'amine primaire monofonctionnelle.

31. Dispersion hybride polymère/polyuréthane selon au moins l'une quelconque des revendications 1 à 30, **caractérisée en ce qu'**on dilue les composants (D) et (E), à l'étape réactionnelle a₅), dans des fractions d'eau préalablement prélevées dans un rapport pondéral de 1/1 à 1/10.

32. Dispersion hybride polymère/polyuréthane selon au moins l'une quelconque des revendications 1 à 31, **caractérisée en ce qu'**on prolonge entièrement la chaîne de groupes NCO libres éventuellement encore présents avec de l'eau à l'issue de l'étape réactionnelle a₅).

33. Dispersion hybride polymère/polyuréthane selon au moins l'une quelconque des revendications 1 à 32, **caractérisée en ce qu'**on réalise l'étape réactionnelle a₅) à une température de 30 à 50°C.

34. Dispersion hybride polymère/polyuréthane selon au moins l'une quelconque des revendications 1 à 33, **caractérisée en ce qu'**on ajuste la teneur en matières solides de polymère de polyuréthane, constitué des composants (A) à (E), à 50 à 60 % en poids par rapport à la quantité totale de dispersion de base de polyuréthane.

35. Dispersion hybride polymère/polyuréthane selon au moins l'une quelconque des revendications 1 à 34, **caractérisée en ce qu'**on ajuste la teneur en matières solides de polymère de polyuréthane, constitué des composants (A) à (E) à 10 à 50 % en poids, de préférence à 20 à 40 % en poids et la teneur en matières solides de composant de formulation (F) à 10 à 70 % en poids, de préférence à 20 à 60 % en poids par rapport à la quantité totale de dispersion de base de polyuréthane formulée in situ ou de façon conventionnelle.

36. Dispersion hybride polymère/polyuréthane selon au moins l'une quelconque des revendications 1 à 35, **caractérisée en ce qu'**on ajuste la teneur en groupes carboxylate du polymère de polyuréthane constitué des composants (A) à (E) à 10 à 40 meq·(100 g)⁻¹, de préférence à 15 à 35 meq· (100 g)⁻¹.

37. Dispersion hybride polymère/polyuréthane selon au moins l'une quelconque des revendications 1 à 36, **caractérisée en ce que** le polymère de polyuréthane, constitué des composants (A) à (E) présente un indice d'acide de 5 à 25 mg de KOH·g⁻¹, de préférence 7,5 à 22,5 mg de KOH·g⁻¹.

38. Dispersion hybride polymère/polyuréthane selon au moins l'une quelconque des revendications 1 à 37, **caractérisée en ce que** le polymère de polyuréthane constitué des composants (A) à (E) présente une masse moléculaire moyenne de 25.000 à 250.000 Dalton.

39. Dispersion hybride polymère/polyuréthane selon au moins l'une quelconque des revendications 1 à 38, **caractérisée en ce que** la taille moyenne des particules de micelles du polymère de polyuréthane, constitué des composants (A) à (E), est de l'ordre de 100 à 500 nm, de préférence de 200 à 400 nm.

40. Dispersion hybride polymère/polyuréthane selon au moins l'une quelconque des revendications 1 à 39, **caractérisée en ce que** le composant (G) est de l'acide acrylique et ses dérivés et/ou de l'acide méthacrylique et ses dérivés et/ou du styrène et ses dérivés.

41. Dispersion hybride polymère/polyuréthane selon au moins l'une quelconque des revendications 1 à 40, **caractérisée en ce qu'**on met en oeuvre, comme composant (G), des combinaisons de 5 à 95 % en poids de méthacrylate de méthyle et 5 à 95 % en poids d'acrylate de n-butyle par rapport à la quantité totale de composant (G).

42. Dispersion hybride polymère/polyuréthane selon au moins l'une quelconque des revendications 1 à 41, **caractérisée en ce qu'**on met en oeuvre, comme composant (G), des combinaisons de 5 à 25 % en poids d'esters hydroxyalkyliques de l'acide acrylique et/ou de l'acide méthacrylique et 75 à 95 % en poids d'autres monomères comportant une ou plusieurs doubles liaisons polymérisables par voie radicalaire.

43. Dispersion hybride polymère/polyuréthane selon au moins l'une quelconque des revendications 1 à 42, **caractérisée en ce que** le composant (H) est un amorceur radicalaire comportant un ou plusieurs groupes azo ou peroxo.

44. Dispersion hybride polymère/polyuréthane selon au moins l'une quelconque des revendications 1 à 43, **caractérisée en ce qu'**on met en oeuvre, en tant que composant (H), un amorceur radicalaire qui présente une demi-vie de 1 heure à une température de dégradation de l'ordre de 40 à 120°C.

45. Dispersion hybride polymère/polyuréthane selon au moins l'une quelconque des revendications 1 à 44, **caractérisée en ce qu'**on met en oeuvre, comme composant (H), du 2,2'-azobisisobutyronitrile.

46. Dispersion hybride polymère/polyuréthane selon au moins l'une quelconque des revendications 1 à 45, **caractérisée en ce qu'**on ajuste le rapport molaire amorceur/monomère des composants (H) et (G) entre 0,001 et 0,05.

47. Dispersion hybride polymère/polyuréthane selon au moins l'une quelconque des revendications 1 à 46, **caractérisée en ce qu'**on ajoute une partie de l'eau de l'étape a₄) seulement à l'étape b₁) pour ajuster la teneur en matières solides.

48. Dispersion hybride polymère/polyuréthane selon au moins l'une quelconque des revendications 1 à 47, **caractérisée en ce qu'**on réalise l'étape réactionnelle b₁) à une température de 15 à 35°C, de préférence de 20 à 30°C.

49. Dispersion hybride polymère/polyuréthane selon au moins l'une quelconque des revendications 1 à 48, **caractérisée en ce qu'**on réalise l'étape réactionnelle b₂) à une différence de température de ± 10°C par rapport à la température à laquelle le composant (H) a une demi-vie de 1 heure.

50. Dispersion hybride polymère/polyuréthane selon au moins l'une quelconque des revendications 1 à 49, **caractérisée en ce qu'**on réalise l'étape réactionnelle b₂) de préférence à une température de 80 ± 10°C en utilisant du 2,2'-azobisisobutyronitrile en tant que composant (H).

51. Dispersion hybride polymère/polyuréthane selon au moins l'une quelconque des revendications 1 à 50, **caractérisée en ce qu'**on réalise la polymérisation radicalaire à l'étape réactionnelle b₂) sans autres émulsifiants.

52. Dispersion hybride polymère/polyuréthane selon au moins l'une quelconque des revendications 1 à 51, **caractérisée en ce que** le polymère pur constitué des composants (G) et (H) à l'étape b₂) présente une température de transition vitreuse de -50 à +100°C, de préférence de -25 à +25°C.

53. Dispersion hybride polymère/polyuréthane selon au moins l'une quelconque des revendications 1 à 52, **caractérisée en ce qu'**on ajuste la teneur en matières solides de polymère hybride de polyuréthane constitué des composants (A) à (E), (G) et (H)
à 50 à 60 % en poids, par rapport à la quantité totale de dispersion hybride de polymère/polyuréthane pure.

54. Dispersion hybride polymère/polyuréthane selon au moins l'une quelconque des revendications 1 à 53, **caractérisée en ce qu'**on ajuste le rapport des teneurs proportionnelles en matières solides de résine polyuréthane constituée des composants (A) à (E) et de résine polymère constituée des composants (G) à (H) à 20/80 à 80/20 % en poids, de préférence à 40/60 à 60/40 % en poids.

55. Dispersion hybride polymère/polyuréthane selon au moins l'une quelconque des revendications 1 à 54, **caractérisée en ce qu'**on ajuste la teneur en matières solides d'hybride polymère/polyuréthane constitué des composants (A) à (E), (G) et (H) à 10 à 50 % en poids, de préférence à 20 à 40 % en poids, et la teneur en matières solides de charges à 10 à 70 % en poids, de préférence à 20 à 60 % en poids, par rapport à la quantité totale de dispersion d'hybride polymère/polyuréthane formulée *in situ* ou de façon conventionnelle.

56. Dispersion hybride polymère/polyuréthane selon au moins l'une quelconque des revendications 1 à 55, **caractérisée en ce qu'**on ajuste la teneur en groupes carboxylate dans l'hybride polymère/polyuréthane constitué des composants (A) à (E), (G) et (H) à 5 à 20 meq· (100 g)⁻¹, de préférence à 10 à 15 meq·(100 g)⁻¹.

57. Dispersion hybride polymère/polyuréthane selon au moins l'une quelconque des revendications 1 à 56, **caractérisée en ce que** l'hybride polymère/polyuréthane, constitué des composants (A) à (E), (G) et (H), présente un indice d'acide de 2,5 à 12,5 mg de KOH·g⁻¹, de préférence de 5 à 10 mg de HOH·g⁻¹.

58. Dispersion hybride polymère/polyuréthane selon au moins l'une quelconque des revendications 1 à 57, **caractérisée en ce que** la taille moyenne des particules des micelles de l'hybride polymère/polyuréthane est de l'ordre de 50 à 500 nm, de préférence de 100 à 400 nm.

59. Dispersion hybride polymère/polyuréthane selon au moins l'une quelconque des revendications 1 à 58, **caractérisée en ce que** l'hybride polymère/polyuréthane, constitués des composants (A) à (E), (G) et (H), a une masse moléculaire moyenne de 100.000 à 500.000 Dalton.

60. Dispersion hybride polymère/polyuréthane selon au moins l'une quelconque des revendications 1 à 59, **caractérisée en ce que** la dispersion hybride polymère/polyuréthane constituée des composants (A) à (E), (G) et (H) présente une absorption de 1 à 25% en poids d'eau distillée pour une quantité appliquée de 0,8 à 1,6 kg/m⁻² après 2 jours de séchage à 23°C et à une humidité relative de l'air de 50 % et au bout de 7 jours de stockage dans de l'eau à 23°C.

61. Utilisation d'une dispersion hybride polymère/polyuréthane selon au moins l'une quelconque des revendications 1 à 60 dans des formulations pour revêtements de sol sportifs sous forme de
(a) liants pour couches élastiques, constitués de granulats de caoutchouc ou de fibres ainsi que, le cas échéant, d'additifs,
(b) agents d'adhérence ou de primaires pour des sous-couches de revêtements de sol sportifs,
(c) revêtements à pulvériser, comportant le cas échéant des charges structurées, à appliquer sur des sous-couches élastiques ou rigides,
(d) revêtements de sol autolissants destinés à être appliqués sur des sous-couches élastiques ou rigides,
(e) mastics pour boucher les pores de sous-couches élastiques ou rigides de revêtements de sol sportifs,
(f) colles pour coller des couches élastiques préfabriquées pour revêtements de sol sportifs,
(g) bouche-pores pour revêtements de sol sportifs, comportant le cas échéant des pigments.

62. Utilisation selon la revendication 61, **caractérisée en ce qu'**on met les formulations en oeuvre dans une quantité de l'ordre de 0,1 à 10,0 kg par m² de surface à revêtir et par opération.

63. Utilisation selon au moins l'une quelconque des revendications 61 à 62, **caractérisée en ce qu'**on applique les formulations sur les sous-couches élastiques ou rigides en couches d'une épaisseur totale de 0,1 à 50 mm.

64. Utilisation selon au moins l'une quelconque des revendications 61 à 63, **caractérisée en ce que** les formulations contiennent 0,1 à 1,0 % en poids, par rapport à la masse totale de la formulation, d'un stabilisateur d'UV à base d'une amine encombrée stériquement.

65. Utilisation selon au moins l'une quelconque des revendications 61 à 64, **caractérisée en ce qu'**on met les formulations en oeuvre sous forme mono et bicomposants.

66. Utilisation selon au moins l'une quelconque des revendications 61 à 65, **caractérisée en ce que**, pour une application bicomposants, on utilise les formulations à base de dispersion hybride polymère/polyuréthane sans solvant en tant que composant de liaison et des polyisocyanates émulsifiables dans l'eau en tant que composant durcisseur.

67. Utilisation selon au moins l'une quelconque des revendications 61 à 66, **caractérisée en ce qu'**on combine les formulations à base de dispersions hybrides polymère/polyuréthane sans solvant avec des formulations à base de dispersions de polyuréthane sans solvant, de dispersions polymères, de poudres polymères redispersables ou de polymères non aqueux.

68. Utilisation d'une dispersion hybride polymère/polyuréthane selon au moins l'une quelconque des revendications 1 à 60 dans le domaine du bâtiment, pour des revêtements monocomposants, sans isocyanate et sans solvant, des matières d'étanchéité, des colles, des peintures et vernis ou des membranes pour les surfaces de matériaux de construction minéraux comme, par exemple, le béton, le plâtre, le ciment ainsi que le verre, le bois et les matériaux à base de bois, le papier, le métal ou les matières plastiques.
